# EUROPEAN PATENT SPECIFICATION

(11) **EP 4 310 695 B1**
(45) Date of publication and mention of the grant of the patent: **21.10.2026**
(21) Application number: 22871663.5
(22) Date of filing: 11.08.2022
(51) Int. Cl.: G06V 30/412, G06V 30/19, G06V 10/82, G06V 30/413, G06V 30/18, G06F 16/383, G06F 16/583, G06N 3/04

(54) **DATA PROCESSING METHOD AND APPARATUS, COMPUTER DEVICE, AND STORAGE MEDIUM**
DATENVERARBEITUNGSVERFAHREN UND -VORRICHTUNG, COMPUTERVORRICHTUNG UND SPEICHERMEDIUM
PROCÉDÉ ET APPAREIL DE TRAITEMENT DE DONNÉES, DISPOSITIF INFORMATIQUE ET SUPPORT DE STOCKAGE

(30) Priority: 22.09.2021 CN 202111106186
(43) Date of publication of application: 24.01.2024
(73) Proprietor: Tencent Technology (Shenzhen) Company Limited, Shenzhen, Guangdong 518057 (CN)
(72) Inventor: ZHU, Lingzi, Shenzhen, Guangdong 518057 (CN); MA, Lianyang, Shenzhen, Guangdong 518057 (CN)
(74) Representative: Nederlandsch Octrooibureau
(86) International application number: PCT/CN2022/111609
(87) International publication number: WO 2023/045605

(56) References cited:
- CN-A- 109 816 039
- CN-A- 111 985 369
- CN-A- 112 559 683
- CN-A- 112 784 092
- CN-A- 112 989 097
- CN-A- 116 434 000
- US-A1- 2021 081 729
- WANG YIRU ET AL: "Cognitive Representation Learning of Self-Media Online Article Quality", SIGGRAPH ASIA 2023 EMERGING TECHNOLOGIES, ACMPUB27, NEW YORK, NY, USA, 12 October 2020 (2020-10-12), pages 843 - 851, XP059442563, ISBN: 979-8-4007-0315-7, DOI: 10.1145/3394171.3413747

## Description

This application claims priority to Chinese Patent Application No.2021111061865, entitled "DATA PROCESSING METHOD AND APPARATUS, COMPUTER DEVICE, AND STORAGE MEDIUM", filed on September 22, 2021 with China National Intellectual Property Administration.

### FIELD

The present disclosure relates to the technical field of computers, and in particular, to data processing technology.

### BACKGROUND

With the development of computer technology, the task of discovering high-quality articles has gradually become a research hotspot. Through this task, high-quality articles can be discovered and pushed to users to improve their reading experience. Currently, the task of discovering the above high-quality articles is usually performed by determining the content quality of the articles from the perspective of texts (without considering the contribution of pictures to the content quality), or by concatenating the embedding features of texts and pictures, and determining whether they are high-quality articles based on the features obtained from the concatenation.

In the above process, whether it is to determine the content quality from the perspective of texts, or to determine the content quality by using the concatenated features of texts and pictures, the discovering accuracy of high-quality articles needs to be improved.

Document WANG YIRU ET AL: "Cognitive Representation Learning of Self-Media Online Article Quality", SIGGRAPH ASIA 2023 EMERGING TECHNOLOGIES, ACMPUB27, NEW YORK, NY, USA, 12 October 2020 (2020-10-12), pages 843-851, discloses joint model CoQAN in combination with the layout organization, writing characteristics and text semantics, designing different representation learning subnetworks, especially for the feature learning process and interactive reading habits on mobile terminals.

### SUMMARY

The present invention is according to the claims.

The embodiments of the present disclosure provide a data processing method and apparatus, a computer device, and a storage medium, which can improve the identification accuracy of an article classification, thereby improving the discovering accuracy of high-quality articles.

In one aspect, a computer device is provided, the computer device including one or more processors and one or more memories, the one or more memories storing therein at least one computer program, and the at least one computer program being loaded and executed by the one or more processors to implement the data processing method according to any one of the above possible implementations.

In one aspect, a storage medium is provided, the storage medium storing therein at least one computer program, the at least one computer program being loaded and executed by a processor to implement the data processing method according to any one of the above possible implementations.

In one aspect, a computer program product or computer program is provided, the computer program product or computer program includes one or more program codes stored in a computer-readable storage medium. The one or more processors of the computer device can read the one or more program codes from the computer-readable storage medium, and the one or more processors execute the one or more program codes, enabling the computer device to execute the data processing method of any one of the above possible implementations.

The advantageous effects brought by the technical solutions provided by the embodiments of the present disclosure at least include:

The method, for textual data and picture data of an article, extracts a textual feature and a picture feature, and predicts an article classification to which the article belongs using a combined interaction feature, which is also referred to as a cross-modal interaction feature, combining the textual feature and picture feature. In addition, the method considers the contribution degree of each of the textual modality and the picture modality to the article classification, rather than relying on the textual modality only. In addition, the extracted cross-modal interaction feature is not a simple concatenation of the textual feature and the picture feature, but can reflect richer and deeper inter-modal interaction information, and helps to improve the identification accuracy of the article classification. Furthermore, it can improve the discovering accuracy of high-quality articles in the scene of identifying high-quality articles.

### BRIEF DESCRIPTION OF THE DRAWINGS

FIG. 1 is a diagram showing an implementation environment of a data processing method according to an embodiment of the present disclosure.
FIG. 2 is a flowchart of a data processing method according to an embodiment of the present disclosure.
FIG. 3 is a flowchart of a data processing method according to an embodiment of the present disclosure.
FIG. 4 is a diagram showing principle of extracting position information according to an embodiment of the present disclosure.
FIG. 5 is a diagram showing principle of a cross-modal interaction model according to an embodiment of the present disclosure.
FIG. 6 is a diagram showing principle of a multi-modal fusion network incorporating relative position encoding according to an embodiment of the present disclosure.
FIG. 7 is a flowchart of a data processing method according to an embodiment of the present disclosure.
FIG. 8 is a diagram showing principle of a multi-modal fusion network according to an embodiment of the present disclosure.
FIG. 9 is a structural diagram of a data processing apparatus according to an embodiment of the present disclosure.
FIG. 10 is a structural diagram of a computer device according to an embodiment of the present disclosure.
FIG. 11 is a structural diagram of a computer device according to an embodiment of the present disclosure.

### DESCRIPTION OF EMBODIMENTS

In order to make the objects, technical solutions, and advantages of the present disclosure clearer, embodiments of the present disclosure will be further described in detail below with reference to the drawings.

In the present disclosure, the terms "the first", "the second", and the like are used to distinguish the same or similar items performing substantially the same function. It is to be understood that the terms "the first", "the second", and "an n^{th}" neither have a logical or chronological dependency on each other nor limit the number and execution order.

In the present disclosure, the term "at least one" means one or more, and the meaning of "a plurality of" means two or more, for example, a plurality of first positions means two or more first positions.

The solution, according to the embodiments of the present disclosure, relates to technologies such as machine learning of artificial intelligence, and in particular to, multi-modal machine learning (MMML) technologies. The terms of MMML are illustrated as follows:

Modality: Each source or form of information may be referred to as a modality. For example, people have touch, hearing, sight, and smell. The media of information include voice, video, text, and the like. A wide variety of sensors, such as radar, infrared, and accelerometers, may each be referred to as a modality. At the same time, a modality can also have a very broad definition, for example, two different languages are considered as two modalities, and even the data sets collected in two different situations can also be considered as two modalities. In an embodiment of the present disclosure, an article is divided into two modalities of texts and pictures, or three modalities of titles, the text, and pictures.

MMML: MMML, referred to as multi-modal learning, aims to realize functions of processing and understanding multi-source modal information through machine learning. Monomodal refers to a single modality, and a multimodal refers to a combination of two or more modalities in various forms. The popular research direction is multi-modal learning between image, video, audio, and semantics. Overall, multi-modal learning is divided into such research directions as multi-modal representation learning, modal transformation, alignment, multi-modal fusion, collaborative learning, and the like. Unimodal representation learning is responsible for representing information as a numerical vector processable by a computer, or further abstracting the information as a higher-level feature vector. Multi-modal representation learning refers to learning a better feature representation by exploiting the complementarity between multiple modalities and eliminating the redundancy between modalities.

Multi-modal fusion: Multi-modal fusion, as a research direction of multi-modal learning, is responsible for combining the information of multiple modalities to perform target prediction (classification or regression), which belongs to one of the earliest research directions of MMML and is the most widely used direction at present. There are other common aliases in multi-modal fusion, such as multi-source information fusion and multi-sensor fusion. In an embodiment of the present disclosure, it involves a two-modal fusion of a textual modality and a picture modality in an article. Since the textual modality may be divided into a title modality and a text modality, it may also involve a three-modal fusion of a title modality, a text modality, and a picture modality.

Picture-textual quality: From the perspective of the article content itself, the detection of high-quality articles with both content quality and reading experience can help the recommendation side better understand and apply the exported articles of the content center (that is, picture-textual content). In an embodiment, when comprehensively evaluating the content quality of articles, the article may be modeled from the dimensions of picture-textual multi-modal integration, article typesetting experience, atomic characteristics of accounts, and the like, to finally complete the identification of high-quality articles.

Relative position encoding (RPE): RPE refers to a position encoding mode in the Transformers model. The Transformers model has two modes in position encoding, including: absolute position encoding and relative position encoding. Absolute position encoding is a position encoding mode commonly used at present, namely, a position vector is initialized randomly on characters of different positions directly and added to an input character vector sequence to input a model as a parameter for training. When using absolute position encoding, the position vectors corresponding to the characters at different positions are certainly different, but the relative meanings of the characters at different positions cannot be explicitly obtained by absolute position encoding. For example, a distance between position 1 and position 2 is closer than that between position 3 and position 10, and distances between position 1 and position 2, and position 3 and position 4 are both 1. The relative relationship between positions can only be implicitly learned using absolute position encoding. In the embodiment of the present disclosure, the feature representation of the relative relationship between positions can be enhanced by introducing relative position encoding.

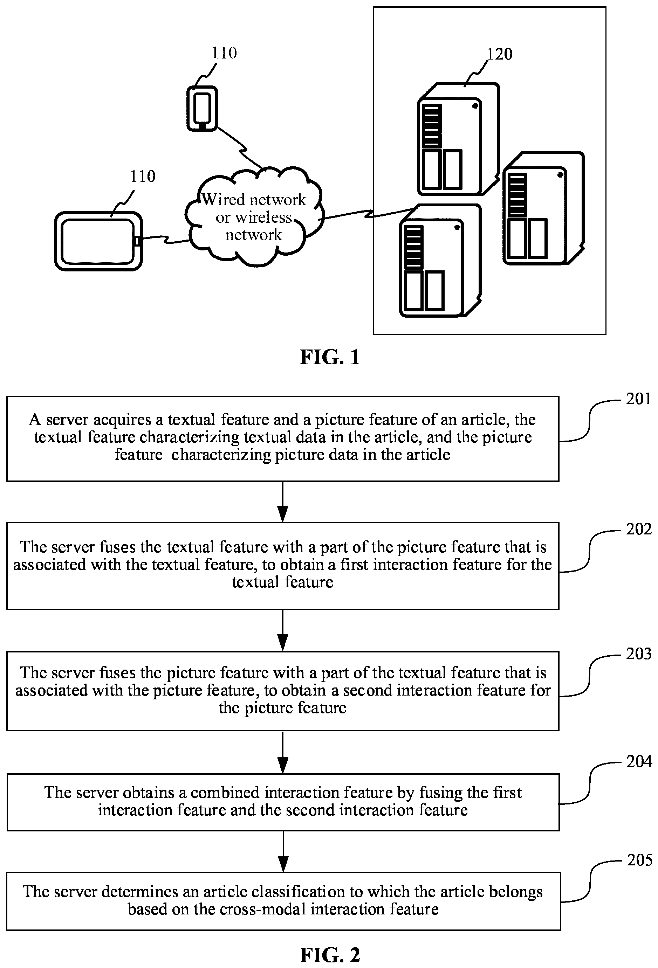

FIG. 1 is a diagram showing an implementation environment of a data processing method according to an embodiment of the present disclosure. Referring to FIG. 1, the implementation environment includes a terminal 110 and a server 120, the terminal 110 and the server 120 being both an example of a computer device.

The terminal 110 is configured to support a user to browse various types of articles including picture-textual contents. For example, the articles include but are not limited to web information, public account tweets, blogs, microblogs, and the like. The embodiments of the present disclosure do not specifically limit the types of articles. An application supporting browsing articles is installed and run on the terminal 110. For example, the application may be a browser application, a social application, a picture-textual information application, a news viewing application, and the like. The embodiments of the present disclosure do not specifically limit the type of the application. Schematically, a user launches an application on the terminal 110 through which the user may browse high-quality articles pushed by the server 120. In an embodiment, the terminal 110 may be, but is not limited to, a smart phone, a tablet, a laptop, a desktop computer, a smart speaker, a smart watch, and the like.

The terminal 110 and the server 120 may be directly or indirectly connected through wired or wireless communication, and the present disclosure is not limited thereto.

The server 120 is configured to identify and push high-quality articles, that is, the server 120 is configured to provide background services to the application installed on the terminal 110. Schematically, the server 120 collects the articles published by the author on the platform, extracts a title, a text and a picture in the articles, and determines whether the article is a high-quality one according to the corresponding title feature, text feature and picture feature, and increases the recommendation weight for the identified high-quality article in the recommendation phase, so that the high-quality article is more likely to be pushed to the terminal 110 used by the user.

In an embodiment, the server 120 includes at least one of a server, multiple servers, a cloud computing platform, or a virtualization center. For example, the server 120 undertakes the primary computing work, and the terminal 110 undertakes the secondary computing work. Alternatively, the server 120 undertakes the secondary computing work, and the terminal 110 undertakes the primary computing work. Alternatively, the terminal 110 and the server 120 may perform cooperative computing using a distributed computing architecture.

In some embodiments, a server may be an independent physical server, or a server cluster or distributed system composed of multiple physical servers, or a cloud server providing basic cloud computing services such as cloud services, cloud databases, cloud computing, cloud functions, cloud storage, network services, cloud communications, middleware services, domain name services, security services, content delivery network (CDN), and large data and artificial intelligence platforms.

Those skilled in the art will appreciate that the number of the above terminals 110 may be more or less. For example, the above terminal 110 may be only one, or the above terminal 110 may be dozens or hundreds, or more. The embodiments of the present disclosure do not limit the number and device type of the terminals 110.

FIG. 2 is a flowchart of a data processing method according to an embodiment of the present disclosure. With reference to FIG. 2, the embodiment is performed by a computer device, illustrated with the computer device as a server, including the following steps 201 to 205.

Step 201: The server acquires a textual feature and a picture feature of an article, the textual feature characterizing textual data in the article, and the picture feature characterizing picture data in the article.

The above articles refer to any article of to-be-determined article classifications, and the types of articles include but are not limited to web information, public account tweets, blogs, microblogs, and the like. The embodiments of the present disclosure do not specifically limit the types of articles.

A server is an exemplary illustration of a computer device, including at least one of a server, multiple servers, a cloud computing platform, or a virtualization center. The embodiments of the present disclosure only take the computer device as the server to illustrate, that is, to complete the type identification of the article on the server side, for example, to identify whether the article is a high-quality article. In some embodiments, the step for the type identification of the article may also be deployed on the terminal side, for example, the terminal independently identifies whether the article is a high-quality article.

In some embodiments, the server obtains the article. In an embodiment, the article may be stored in an article database. Alternatively, the article may be newly uploaded by a terminal to a server. Alternatively, the article may be downloaded from a distributed file system. The embodiments of the present disclosure do not specifically limit the sources of to-be-determined articles.

In the scenario of identifying a high-quality article, if the textual content and textual quality of the two articles are similar, but the picture quality of the two articles is different, the picture quality of the two articles affects the determination result of whether the two articles are high-quality articles. It can be seen that in addition to the textual modality, the picture modality, that is, the visual modal, also affects the identification result of the high-quality article. Therefore, in the embodiment of the present disclosure, in addition to the textual modality, a picture modality is also introduced to comprehensively utilize multi-modal data to accurately identify high-quality articles.

In some embodiments, after acquiring the article, the server extracts the textual data and the picture data in the article separately because the text and the picture have different features with different feature extraction modes. The above process can be viewed as an extraction process for multi-modal data in the article. In an embodiment, the article may be divided into a textual modality and a picture modality only, which can reduce the computational complexity of multi-modal fusion.

In some embodiments, if the article is divided into two modalities including a textual modality and a picture modality only, the server may separately extract a textual semantic feature of the textual data and a picture depth feature of the picture data, obtain the textual feature by fusing the textual semantic feature and a textual position feature, and obtain the picture feature by fusing the picture depth feature and a picture position feature.

In the above process, for the data of the two different modalities, namely, the textual modality and picture modality, feature extraction may be performed in different ways, to obtain the textual feature and the picture feature. In addition, since position-related information is fused in each of the textual feature and the picture feature, different features may be presented in response to the same texts or pictures appearing in different positions in the article, thereby improving the expression ability of each of the textual feature and the picture feature.

In some embodiments, since a title and a text in the texts also have different features, the server may further separately extract title data and text data in extracting the textual data, to introduce more and richer feature information, namely, dividing into three modalities of a title modality, a text modality, and a picture modality, to improve the identification accuracy of the overall article classification.

In some embodiments, if divided into three modalities of a title modality, a text modality, and a picture modality, the server separately extracts a title semantic feature of the title data, a text semantic feature of the text data, and a picture depth feature of the picture data. Then the server fuses the title semantic feature and a title position feature to obtain the title feature, fuses the text semantic feature and a text position feature to obtain the textual feature, and fuses the picture depth feature and a picture position feature to obtain the picture feature.

In the above process, for the data of the three different modalities, namely, the title modality, the text modality, and the picture modality, feature extraction may be targeted in different ways, to obtain the title feature, the textual feature, and the picture feature. In addition, since position-related information is fused in each of the title feature, the textual feature, and the picture feature, different features are presented in response to the same title, text, or picture appearing in different positions in the article, thereby improving the expression ability of each of the title feature, the textual feature, and the picture feature.

In some embodiments, the above position features, such as the textual position feature, the picture position feature, the title position feature, and the text position feature, may all be absolute position features obtained by using an absolute position encoding mode, which can simplify the training process of multi-modal fusion.

In some embodiments, the above position features, such as the textual position feature, the picture position feature, the title position feature, and the text position feature, may all be relative position features obtained by using a relative position encoding mode. The relative position features characterizes an order in which corresponding textual data and picture data appear in the article and a distance between the corresponding textual data and picture data, or characterizes an order in which corresponding title data, text data, and picture data appears in the article and distances between the corresponding title data, text data, and picture data. In the next embodiment, the relative position encoding mode of the relative position features will be described in detail below, which will not be repeated here.

Step 202: The server fuses the textual feature with a part of the picture feature that is associated with the textual feature, to obtain a first interaction feature for the textual feature.

In some embodiments, for the case of the fusion of the textual modality and picture modality, the server may, taking the textual modality as a main modality, receive auxiliary information about the picture modality, for example, to acquire a part of the picture feature that is associated with the textual feature and on this basis, to acquire the first interaction feature. In some embodiments, the part of the picture feature being associated with the textual feature indicates that a position of picture data characterized by the part of the picture feature is adjacent to a position of textual data characterized by the textual feature.

In some embodiments, for the case of the fusion of the title modality, text modality, and picture modality, the first interaction feature includes a title interaction feature and a text interaction feature. In an embodiment, the server may, taking the title modality as a main modality, receive respective auxiliary information about the text modality and picture modality, for example, to acquire a part of the text feature and a part of the picture feature that are associated with the title feature, and on this basis, to acquire the title interaction feature. In addition, the server may, taking the text modality as a main modality, receive respective auxiliary information about the title modality and the picture modality, for example, to acquire a part of the title feature and a part of the picture feature that are associated with the text feature, and on this basis, to acquire the text interaction feature.

Step 203: The server fuses the picture feature with a part of the textual feature that is associated with the picture feature, to obtain a second interaction feature for the picture feature.

In some embodiments, for the case of the fusion of the textual modality and picture modality, the server may, taking the picture modality as a main modality, receive auxiliary information about the textual modality, for example, to acquire a part of the textual feature that is associated with the picture feature, and on this basis, to acquire the second interaction feature. In some embodiments, the part of the textual feature being associated with the picture feature indicates that a position of textual data characterized by the part of the textual feature is adjacent to a position of picture data characterized by the picture feature.

In some embodiments, for the case of the fusion of the title modality, text modality, and picture modality, the server may, taking the picture modality as a main modality, receive respective auxiliary information about the title modality and the text modality, for example, to acquire a part of the title feature and a part of the text feature that are associated with the picture feature, and on this basis, to acquire the second interaction feature.

Step 204: The server obtains a combined interaction feature by fusing the first interaction feature and the second interaction feature.

In some embodiments, the cross-modal interaction feature acquired in the above step 204 refers to the information obtained by fusing the features of multi-modal data each with reference to other modal data, so that the cross-modal interaction feature can strengthen the correlation between the textual data and the picture data. Each modality in the multiple modalities may be used as a main modality and receive the auxiliary of other modalities and obtain a cross-modal feature. The cross-modal features corresponding to respective modalities are fused to obtain a final cross-modal interaction feature.

For the case of the fusion of the textual modality and picture modality, the server may directly fuse the first interaction feature and the second interaction feature to obtain the final cross-modal interaction feature.

In the above process, for an article, since the expression modes of a textual modality and a picture modality are different, there may be a phenomenon of cross (namely, information redundancy) or complementarity (namely, containing more information than a mono-modal feature) between a textual feature and a picture feature. In summary, the significant features of multi-modal data are redundancy and complementarity, and even there may be multiple different information interactions between modalities. Therefore, multi-modal data in an article can be reasonably processed by taking a textual modality as a main modality to extract a first interaction feature and taking a picture modality as a main modality to extract a second interaction feature, obtaining more rich interaction features.

For the case of the fusion of the title modality, text modality, and picture modality, the server may fuse the title interaction feature, the text interaction feature, and the second interaction feature to obtain the final cross-modal interaction feature.

In the above process, an article is divided into three modalities, namely, a title modality, a text modality, and a picture modality, with a directed cross-modal attention interaction through a pair-wise combination, where each modal, acting as a main modality, receives auxiliary information about the other two modalities, and finally obtains cross-modal interaction features through fusion. Since more modal interaction information is introduced than the two-modal fusion, it is more helpful to improve the identification accuracy of a high-quality article.

Step 205: The server classifies the article, that is, determines an article classification to which the article belongs, based on the cross-modal interaction feature.

In some embodiments, the server performs full-connection processing on the cross-modal interaction feature to obtain a full-connection feature. The server performs exponential normalization on the full-connection feature to obtain a probability prediction result of the article, where the probability prediction result includes multiple prediction probabilities corresponding to multiple classifications, namely, the probability prediction result characterizes the multiple prediction probabilities of the article belonging to the multiple classifications. Furthermore, a classification corresponding to the prediction probability meeting a target condition is determined as an article classification to which the article belongs.

In an embodiment, the server inputs the cross-modal interaction feature into a full-connection layer or a full-connection network, outputs the full-connection feature, and then maps the full-connection feature using an exponential normalized Softmax function to obtain the prediction probability of the article belonging to each classification. Further, the server selects a prediction probability meeting the target condition from all the prediction probabilities, and determines the classification corresponding to the prediction probability meeting the target condition as an article classification to which the article belongs.

In some embodiments, the target condition may be a maximum prediction probability, then the server may determine a maximum prediction probability from the multiple prediction probabilities, and determine the classification corresponding to the maximum prediction probability as an article classification to which the article belongs. Alternatively, the server may rank the multiple prediction probabilities in descending order, and select the classification corresponding to the prediction probability ranked first as an article classification to which the article belongs.

In some embodiments, the target condition may be that the prediction probability is greater than a probability threshold, then the server may determine each prediction probability greater than the probability threshold from the multiple prediction probabilities, and randomly select a classification from the classifications corresponding to each prediction probability greater than the probability threshold as an article classification to which the article belongs. The prediction probability is any value greater than or equal to 0 and less than or equal to 1.

In some embodiments, the target condition may be a random selection of top K (K ≥ 1) prediction probabilities. The server may rank the multiple prediction probabilities in descending order, select K prediction probabilities ranked in the top K, and randomly select a classification from the K classifications corresponding to the K prediction probabilities as an article classification to which the article belongs. K is an integer greater than or equal to 1.

In the above process, an article classification to which an article belongs can be identified based on a multi-modal fusion mode combined with relative position encoding. In an embodiment, the article classification may be determined according to whether the article is of high quality, such as high-quality articles and non-high-quality articles. In an embodiment, the article classification may also be determined according to the field to which the main content of the article belongs, such as finance, entertainment, news, and science popularization. The embodiments of the present disclosure do not specifically limit the division of the article classification.

In an exemplary scenario, the article classification is determined according to whether the article is of high quality, which is applicable in a scenario of identifying a high-quality article, that is, identifying high-quality picture-textual contents. For example, the article classification includes high-quality articles and non-high-quality articles, or high-quality articles, common articles, low-quality articles, and the like. The embodiments of the present disclosure do not specifically limit the division of the article classification. In a high-quality article identification scenario, cross-modal interaction information between adjacent picture-text (that is, texts and pictures with similar positions) in the same article is very important. Texts in the articles are usually represented in the form of character sequences or sentence sequences, and pictures may also be arranged as picture sequences in a sequential order. Therefore, a sequence-level interaction can be achieved between a textual modality and a picture modality. By constructing a sequence-level multi-modal fusion network, interaction features between multiple modalities can be extracted by making full use of sequence-level interaction information between modalities in the case where the respective features of texts and pictures are not aligned before being put into a prediction process of the article classification to improve the identification accuracy of the article classification.

In an exemplary scenario, the article classification is determined according to the field to which the main content of the article belongs, which is applicable to a scenario in which accurate pushing is performed according to a user image. For example, the article classification includes finance, entertainment, news, science popularization, and the like. In an embodiment, in the application scenario, the server determines whether to recommend the article to the user based on the similarity between the cross-modal interaction feature of the article and user features of the user, to be able to recommend the article meeting the long-term preferences to the user. Alternatively, the server determines whether to recommend the article to the user based on the similarity between the cross-modal interaction feature of the article and historical reading average features of the user, in which the historical reading average features refer to the average features of the cross-modal interaction feature of historical articles read by the user within the last week (or within a specified time period such as one month and two months), to recommend articles meeting the recent preferences to the user.

All the above alternative technical solutions may be combined in any manner to form alternative embodiments of the present disclosure, which will not be repeated here.

The method according to the embodiments of the present disclosure, for textual data and picture data of an article, extracts a textual feature and a picture feature, and predicts an article classification to which the article belongs using a cross-modal interaction feature combining the textual feature and picture feature. In addition, the method considers the contribution degree of each of the textual modality and the picture modality to the article classification, rather than relying on the textual modality only. In addition, the extracted cross-modal interaction feature is not a simple concatenation of the textual feature and the picture feature, but can reflect richer and deeper inter-modal interaction information, and helps to improve the identification accuracy of the article classification. Furthermore, it can improve the discovering accuracy of high-quality articles in the scene of identifying high-quality articles.

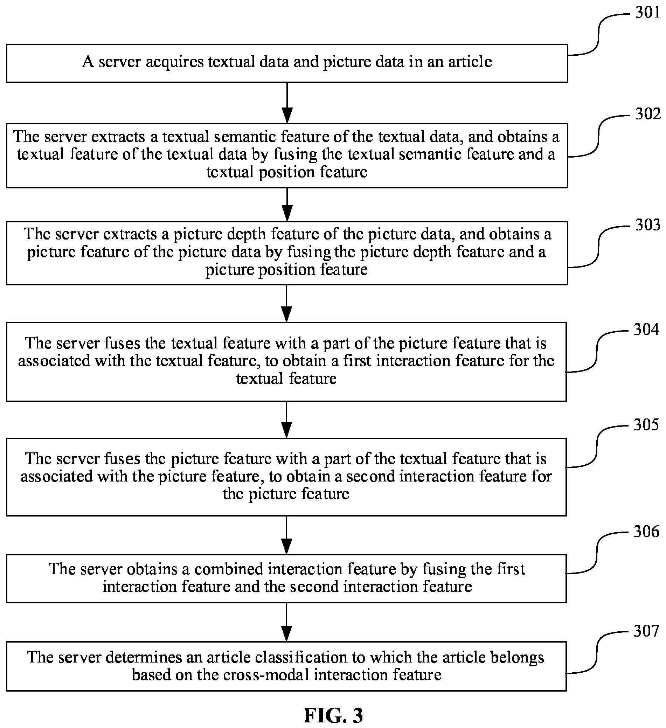

FIG. 3 is a flowchart of a data processing method according to an embodiment of the present disclosure. With reference to FIG. 3, the embodiment is performed by a computer device, illustrated with the computer device as a server. For the case where a target article is only divided into two modalities, namely, a text modality and a picture modality, the embodiment of the present disclosure will describe in detail how to identify an article classification of an article based on a two-modal fusion mode, including the following steps 301 to 307.

Step 301: The server obtains textual data and picture data in the article.

The articles refer to any article to be classified, and the types of articles include but are not limited to web information, public account tweets, blogs, microblogs, and the like. The embodiments of the present disclosure do not specifically limit the types of articles.

In some embodiments, the server obtains the article. In an embodiment, the article stored in an article database. Alternatively, the article is newly uploaded by a terminal to a server. Alternatively, the article is downloaded from a distributed file system. The embodiments of the present disclosure do not specifically limit the source of articles.

In some embodiments, the server extracts the textual data and the picture data in the article separately because the text and the picture have different features with different feature extraction modes. The above process can be viewed as an extraction process for multi-modal data in the article. In an embodiment, the article is divided into a textual modality and a picture modality only, which can reduce the computational complexity of multi-modal fusion.

Step 302: The server extracts a textual semantic feature of the textual data, and obtains the textual feature of the textual data by fusing the textual semantic feature and a textual position feature.

In some embodiments, the server may extract the textual semantic feature based on a textual encoding model configured to extract the textual semantic feature of the textual data, that is, the server inputs the textual data into the textual encoding model and encodes the textual data through the textual encoding model to obtain the textual semantic feature.

In an embodiment, a model structure of the textual encoding model includes, but is not limited to, any one or a combination of at least two of the following: bidirectional encoder representation from transformers (BERT, a translation model using a bidirectional encoding representation), Transformers (a classical translation model), embeddings from language models (ELMo, a language model using embedding processing), neural network language model (NNLM, a neural network language model), and the like. The embodiments of the present disclosure do not specifically limit the model structure of the textual encoding model. For example, the textual encoding model is a BERT model to reduce the computational complexity of the feature extraction process. For example, the textual encoding model is formed by cascading an encoder of the BERT model and a Transformers model.

In an embodiment, the textual encoding model being formed by cascading an encoder of the BERT model and the Transformers model is taken as an example for illustration. Assuming that the textual data includes at least one sentence, the server performs word segmentation on each sentence to obtain at least one character included in each sentence, and arranges each character of each sentence according to the sequence in which it appears in the article to form a character sequence, and adds [SEP] as a sentence divider at the end of each sentence in the character sequence, and adds [CLS] as a classifier at the top of the character sequence. The sentence divider is used for breaking between adjacent sentences, and the classifier is used for characterizing the global semantic information of the whole character sequence.

The character sequence is input into a BERT model including an embedding layer and at least one bidirectional encoding layer. Each bidirectional encoding layer is configured to perform forward encoding and reverse encoding on an input signal, and the output of each bidirectional encoding layer serves as the input of the next bidirectional encoding layer, that is, each bidirectional encoding layers is connected in series. Each bidirectional encoding layer includes two parts, one part being an attention network, and the other part being a forward full-connection layer. Each hidden layer in the attention network is obtained by performing a weighted average on the hidden layers of the previous layer, so that each hidden layer can be directly associated with all the hidden layers of the previous layer. A hidden layer vector for characterizing global information may be obtained using the input long sequence information (namely, the character sequence). The forward full-connection layer is configured to further process the global information determined by the attention network to enhance the learning capability of the whole BERT model.

In an embodiment, the character sequence is input into an embedding layer of the BERT model firstly, and each character in the character sequence is embedded by the embedding layer, that is, mapping each character to an embedding space to obtain an embedding vector of each character, namely, to obtain an embedding vector sequence. Then, the embedding vector sequence is input into the at least one bidirectional encoding layer, through which each embedding vector in the embedding vector sequence is bidirectional encoded (including forward encoding and reverse encoding), and a semantic vector of each character is output, that is, a semantic vector sequence is obtained. Each character in the character sequence corresponds to an embedding vector in the embedding vector sequence, and each embedding vector in the embedding vector sequence corresponds to a semantic vector in the semantic vector sequence.

In the above process, forward encoding and reverse encoding are performed on the embedding vector sequence through a bidirectional encoding layer. Forward encoding enables the semantic vector corresponding to each character to fuse relevant information about characters appearing before the character, while reverse encoding enables the semantic vector corresponding to each character to fuse relevant information about characters appearing after the character. Two-way encoding operations can greatly improve the expression ability of the semantic vector of each character.

Illustrated is a first bidirectional encoding layer in which an attention network and a forward full-connection layer are included. The embedding vector sequence is input into an attention network of a first bidirectional encoding layer, and weighted through the attention network to extract an attention feature sequence of the embedding vector sequence. The attention feature sequence is input into a forward full-connection layer of the first bidirectional encoding layer, and performed bidirectional semantic encoding (including forward encoding and reverse encoding) through the forward full-connection layer to output an implicit vector sequence, inputting the implicit vector sequence into a second bidirectional encoding layer, and so on. The processing logic of subsequent bidirectional encoding layers is similar to the first bidirectional encoding layer, which will not be repeated here. Due to the introduction of the attention mechanism in the bidirectional encoding layer, it is possible to focus each character on a character that is more closely related to itself during each semantic encoding, so that the finally obtained semantic vectors for each character have a higher accuracy.

Then, the semantic vector sequence output by the last bidirectional encoding layer in the BERT model is input into the encoder of the Transformers model. The Transformers model includes multiple cascaded encoders, for example, including N (N ≥ 1) cascaded encoders, such as N = 6 or other numbers, which is not specifically limited by the embodiments of the present disclosure. Each encoder further includes a multi-head attention layer and a feedforward neural network layer therein, where the multi-head attention layer is configured to comprehensively extract the correlation between each character within a character sequence from multiple expression subspaces, and the feedforward neural network layer is configured to perform full connection on feature vectors output by the multi-head attention layer. A residual structure is provided after the multi-head attention layer and the feedforward neural network layer, that is, performing residual connection (namely, concatenation) on an input and an output of a current layer before inputting into a next layer after normalization. The input semantic vector sequence is encoded by multiple encoders of the Transformers model, and a textual semantic feature of the textual data is output by the last encoder.

In the above process, a textual encoding model, formed by cascading encoders of a BERT model and a Transformers model, may extract a textual semantic feature with a strong expression ability. In an embodiment, it is also possible to use only the BERT model or only the encoder of the Transformers model to extract the textual semantic feature, to reduce the computational complexity in extracting the textual semantic feature, which is not specifically defined by the embodiments of the present disclosure.

In some embodiments, the server may further acquire a textual position feature of the textual data, the textual position feature characterizing a position order in which each character appears in the textual data. In an embodiment, position information of each character in the character sequence is encoded to obtain a textual position feature of the textual data. Then, the textual semantic feature and the textual position feature are concatenated to obtain a textual feature of the textual data.

In some embodiments, the server may encode position information of each character using an absolute position encoding mode or a relative position encoding mode. The embodiment of the present disclosure does not specifically limit encoding modes of the position information. In an embodiment, the relative position encoding mode is adopted as an example in the following step 303, which will not be described in detail here.

In some embodiments, if the dimension of the textual semantic feature is different from that of the textual position feature, the textual semantic feature and the textual position feature cannot be directly concatenated. A one-dimensional convolution (Conv1D) layer may be used to perform dimension transformation (namely, dimension increase or dimension reduction) on the textual semantic feature, so that the transformed textual semantic feature has the same dimension as the textual position feature, and the transformed textual semantic feature and the textual position feature are concatenated to obtain the textual feature of the textual data. The Conv1D layer refers to a convolution layer with a convolution kernel size of 1 by 1.

In some embodiments, the textual semantic feature and the textual position feature may also be fused, in addition to a concatenation mode, by means of element addition, element multiplication, bilinear fusion, and the like. The embodiments of the present disclosure do not specifically limit the fusion modes.

Step 303: The server extracts a picture depth feature of the picture data, and obtains the picture feature of the picture data by fusing the picture depth feature and a picture position feature.

In some embodiments, the server may extract the picture depth feature by using a picture depth model configured to extract the picture depth feature of the picture data, that is, the server inputs the picture data into the picture depth model and performs convolution processing on the picture data through the picture depth model to extract and obtain the picture depth feature. In an embodiment, the picture depth model includes, but is not limited to convolutional neural network (CNN), deep residual network (ResNet), MobileNet (a lightweight neural network), and the like. The embodiments of the present disclosure do not specifically limit the model structure of the picture depth model.

In an embodiment, the picture depth model may be a MobileNet model, which refers to replacing a standard convolution layer in a visual geometry group (VGG) model with a depthwise separable convolution layer. The depthwise separable convolution is a decomposable convolution operation, which may be decomposed into depthwise convolution and pointwise convolution. The depthwise convolution differs from a standard convolution in that the standard convolution uses a convolution kernel on all channels of an input feature map, while the depthwise convolution uses different convolution kernels for each input channel, that is, one convolution kernel corresponds to one input channel, and the pointwise convolution is a Conv1D, namely, the size of the convolution kernel used is the standard convolution of 1 by 1. By using depthwise separable convolution, the amount of computation and the number of parameters of the picture depth model can be greatly reduced.

In some embodiments, the MobileNet model includes a standard convolution layer of 3 by 3, multiple stacked depthwise separable convolution layers, a mean pooling layer, and a full-connection layer. The standard convolution layer may be down-sampled and then input into the next layer, and similarly, the partial depthwise separable convolution layer may be down-sampled and then input into the next layer. The mean pooling layer is configured to perform mean pooling on the feature map output by the last depthwise separable convolution layer, and the full-connection layer is configured to perform full connection on the feature map output by the mean pooling layer. Schematically, the MobileNet model includes a total of 28 layers with 13 depthwise separable convolution layers.

In some embodiments, since an article generally includes multiple pictures, the multiple pictures can constitute a picture sequence. The server inputs the picture sequence into a MobileNet model, where a standard convolution operation is performed on the picture sequence via a standard convolution layer to obtain a first feature map; the first feature map is input into multiple cascaded depthwise separable convolution layers; each depthwise separable convolution layer performs a depthwise separable convolution operation on the feature map output by the previous layer; the last depthwise separable convolution layer outputs a second feature map, and the second feature map is input into a mean pooling layer; a mean pooling operation is performed on the second feature map via the mean pooling layer to obtain a third feature map; and the third feature map is input into the full-connection layer, performing full connection on the third feature map via the full-connection layer to obtain the picture depth feature.

In some embodiments, the server may also acquire a picture position feature of the picture data, the picture position feature characterizing a position order in which each picture appears in the picture data. In an embodiment, position information of each picture in the picture sequence is encoded to obtain a picture position feature of the picture data. Then, the picture depth feature and the picture position feature are concatenated to obtain a picture feature of the picture data.

In some embodiments, the server may encode position information of each picture using an absolute position encoding mode or a relative position encoding mode. The embodiment of the present disclosure does not specifically limit the encoding modes of the position information.

In an embodiment, the use of the relative position encoding mode is illustrated. In this case, the textual position feature and the picture position feature are both relative position features between the textual data and the picture data, the relative position features characterizing an order in which the textual data and the picture data appears in the article and a distance between the textual data and the picture data.

In some embodiments, the acquisition methods of the relative position features include: determining position information of multiple texts in the textual data and multiple pictures in the picture data in the article; constructing a relative position encoding matrix based on the position information, any element in the relative position encoding matrix characterizing relative position information between a text corresponding to a column to which the element belongs and a picture corresponding to a row to which the element belongs; and determining a relative position feature between any of the multiple texts and any of the multiple pictures based on the relative position encoding matrix.

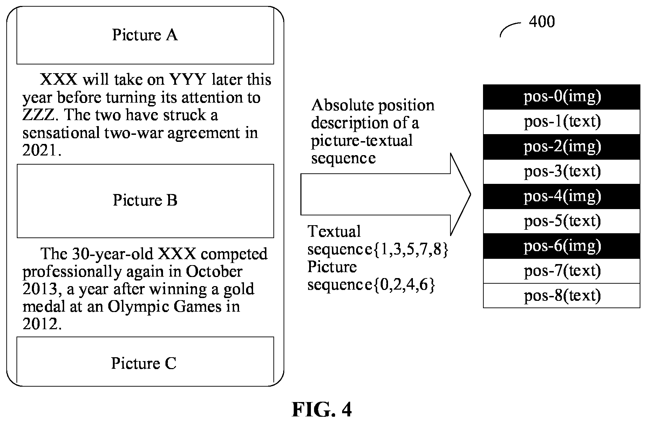

FIG. 4 is a diagram showing principle of extracting position information according to an embodiment of the present disclosure. As shown in 400, assuming that an article includes five pieces of texts and four pictures, where the position number of a textual sequence composed of the five pieces of texts is {1, 3, 5, 7, 8}, and the position number of a picture sequence composed of the four pictures is {0, 2, 4, 6}, then the extracted absolute position relationship for the article may be represented as pos-0(img), pos-1(text), pos-2(img), pos-3(text), pos-4(img), pos-5(text), pos-6(img), pos-7(text), and pos-8(text). Schematically, based on the above absolute positional relationship, a relative position encoding matrix is constructed with a textual sequence representing a matrix column and a picture sequence representing a matrix row, which is shown in the following Table 1.

**Table 1**

| | 1 | 3 | 5 | 7 | 8 |
|---|---|---|---|---|---|
| 0 | 1 | 3 | 5 | 7 | 8 |
| 2 | -1 | 1 | 3 | 5 | 6 |
| 4 | -3 | -1 | 1 | 3 | 4 |
| 6 | -5 | -3 | -1 | 1 | 2 |

Each element in the relative position encoding matrix characterizes relative position information between a text corresponding to a column to which the element belongs and a picture corresponding to a row to which the element belongs. For example, the element "3" in the second row and the third column of the relative position encoding matrix represents the relative position information between the text "5" corresponding to the third column and the picture "2" corresponding to the second row. 3 = 5-2.

Upon constructing a relative position encoding matrix, relative position information between each text and each picture may be determined through the relative position encoding matrix, and a corresponding relative position feature may be obtained by encoding the relative position information.

In the above process, explicit relative position information may be introduced in both the textual feature and the picture feature using the relative position feature, thus enhancing the expression ability of each of the textual feature and the picture feature.

In some embodiments, the textual position feature and the picture position feature determined by using the traditional absolute position encoding mode both belong to an absolute position feature, which can implicitly learn the position correlation of different text passages and different article illustrations, and fully consider the modal internal position relationship between the textual sequence and the picture sequence.

In some embodiments, if the dimension of the picture depth feature is different from that of the picture position feature, the picture depth feature and the picture position feature cannot be directly concatenated. A Conv1D layer may be used to perform dimension transformation (namely, dimension increase or dimension decrease) on the picture depth feature, so that the dimension-transformed picture depth feature is the same as the dimension of the picture position feature, thereby concatenating the dimension-transformed picture depth feature and the picture position feature to obtain the picture feature of the picture data. The Conv1D layer refers to a convolution layer with a convolution kernel size of 1 by 1.

In some embodiments, the picture depth feature and the picture position feature may be fused, in addition to a concatenation mode, by means of element addition, element multiplication, bilinear fusion, and the like. The embodiments of the present disclosure do not specifically limit the fusion modes.

In the above steps 302 to 303, a possible implementation is provided for the server to obtain a textual feature and a picture feature of an article by fusing a textual modality and a picture modality, where the textual feature characterizes textual data in the article, and the picture feature characterizes picture data in the article. In the next embodiment, it will be described how the server obtains the title feature of the title data, the text feature of the text data, and the picture feature of the picture data in case of a three-modal fusion of a title modality, a text modality, and a picture modality, which will not be repeated here.

It is to be understood that in practical application, step 302 may be performed first and then step 303 may be performed; step 303 may be performed first and then step 302 may be performed; and step 302 and step 303 may be performed at the same time. The present disclosure does not make any limitation on the order of performing step 302 and step 303 herein.

Step 304: The server fuses the textual feature with a part of the picture feature that is associated with the textual feature, to obtain a first interaction feature for the textual feature.

In some embodiments, a textual modality is used as a main modality that combines auxiliary information of a picture modality, that is, the server acquires a part of the picture feature that is associated with the textual feature, and processes the textual feature and the part of the picture feature using a cross-modal interaction model to obtain the first interaction feature. In an embodiment, the cross-modal interaction model includes, but is not limited to a Transformers model or a variant of the Transformers model.

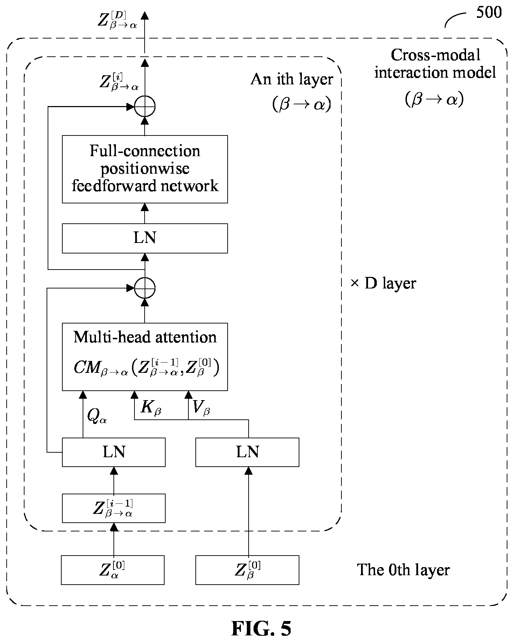

FIG. 5 is a diagram showing principle of a cross-modal interaction model according to an embodiment of the present disclosure. As shown in 500, the cross-modal interaction model being a cross-modal Transformers model is taken as an example for illustration, the cross-modal Transformers model includes D + 1 (D ≥ 0) cross-modal interaction layers. Assuming that an α modality is the main modality (for example, the textual modality) and a β modality is the auxiliary modality (for example, the picture modality), the extraction process of the interaction feature from the β modality to the α modality (β to α) is as follows:

A feature ${Z}_{α}^{\left[0\right]}$ of the α modality at time t = 0 and a feature ${Z}_{β}^{\left[0\right]}$ of the β modality at time t = 0 are input to the 0^{th} layer of the cross-modal Transformers model. Since the processing of the features of the two input modalities by each layer in the cross-modal Transformer model is similar, the processing logic of an i^{th} layer is illustrated, where i is any integer greater than or equal to 0 and less than or equal to D + 1.

Input signals for the i^{th} layer include an interaction feature ${Z}_{β \to α}^{\left[i-1\right]}$ from the β modality to the α modality at time t = i -1 and a feature ${Z}_{β}^{\left[0\right]}$ of the β modality at time t = 0. The feature ${Z}_{β \to α}^{\left[i-1\right]}$ are input into a LayerNorm (LN) layer for normalization to obtain a feature ***Q**_{α}*. Similarly, the feature ${Z}_{β}^{\left[0\right]}$ are input into another LN layer for normalization to obtain features ***K**_{β}* and ***V**_{β}.* The above features ***Q**_{α}*, ***K**_{β},* and ***V**_{β}* are input into a multi-head attention layer, and the input features ***Q**_{α}*, ***K**_{β},* and ***V**_{β}* are weighted based on an attention mechanism via the multi-head attention layer to extract a cross-modal feature $C {M}_{β \to α} \left({Z}_{β \to α}^{\left[i-1\right]}, {Z}_{β}^{\left[0\right]}\right)$ between the input signals; and the cross-modal feature $C {M}_{β \to α} \left({Z}_{β \to α}^{\left[i-1\right]}, {Z}_{β}^{\left[0\right]}\right)$ and the feature ***Q**_{α}* in the input signals are added by elements to obtain a fused feature. The fused feature is input into another LN layer for normalization, and the normalized fused feature is input into a full-connection positionwise feedforward network layer to perform full connection; the features output by the full-connection positionwise feedforward network layer and the fused feature input to the full-connection positionwise feedforward network layer are added by elements to obtain an output feature of the i^{th} layer, namely, an interaction feature ${Z}_{β \to α}^{\left[i\right]}$ from the β modality to the α modality at time t = i, and so on; finally, a final interaction feature ${Z}_{β \to α}^{\left[D\right]}$ (namely, a first interaction feature) is output from a D^{th} layer. Two addition operations by elements are equivalent to performing residual connection on respective inputs and outputs of the multi-head attention layer and the full-connection positionwise feedforward network layer.

In the above process, the cross-modal Transformer model receives a sequence feature of the main modality and the auxiliary modality as an input signal, and finally outputs a main modality representation (namely, a first interaction feature) fusing the auxiliary modality after two-stage processing by the multi-head attention layer and the full-connection positionwise feedforward network layer. The multi-head attention layer may be regarded as a modification to a self-attention layer, changing K and V of the input feature to feature sequences ***K**_{β}* and ***V**_{β}* of the auxiliary modality β, while the feature Q is a feature sequence ***Q**_{α}* of the main modality α. The main modality is used to select the information of the auxiliary modality owing interaction with itself in the auxiliary modality, so that the extracted first interaction feature has stronger feature expression ability. Further, the structure of the cross-modal Transformer model has versatility and flexibility, and can be customized and combined according to the importance of a modal in designing the model. The attention mechanism of the cross-modal in the multi-head attention layer is directional, namely, for the same pair of input modalities {text, picture}, the interaction features extracted by the text-based modality and the picture-based modality are different, such as the first interaction feature, extracted in response to the text-based modal being used in the present step 304, and a second interaction feature, extracted in response to the picture-based modal being used in the following step 305. The first interaction feature is different from the second interaction feature, which helps the model to make full use of the interaction information between modalities. Furthermore, the cross-modal Transformer model may fuse more high-order interaction information than the traditional single-layer interaction scheme by using the stack of multiple cross-modal interaction layers.

In the above process, the first interaction feature is directly output by the cross-modal Transformers model, which can reduce the computational complexity when acquiring the first interaction feature. In some embodiments, the feature output by the cross-modal Transformer model can also be used as an intermediate interaction feature, and then the intermediate interaction feature is input into a basic Transformers model for encoding and then decoding, and finally the first interaction feature is output by the basic Transformer model.

In an embodiment, the server inputs the intermediate interaction feature into a Transformers model including N cascaded encoders and N cascaded decoders. The N cascaded encoders are called to encode the intermediate interaction feature, and the feature obtained by encoding is input into the N cascaded decoders for decoding to obtain the first interaction feature. N is an integer greater than or equal to 1, for example, N = 6 or other values.

In some embodiments, each encoder in the N cascaded encoders includes a multi-head attention layer and a feedforward neural network layer therein, where the multi-head attention layer is configured to comprehensively extract the correlation between feature vectors at various moments from multiple expression subspaces, and the feedforward neural network layer is configured to perform full connection on feature vectors output by the multi-head attention layer. A residual structure is provided after the multi-head attention layer and the feedforward neural network layer, that is, performing residual connection (namely, concatenation) on an input and an output of a current layer before inputting into a next layer after normalization. The input vectors are encoded by the N cascaded encoders, and the feature output by the last encoder is input to the N cascaded decoders.

Each decoder of the N cascaded decoders includes a masked multi-head attention layer, a fused multi-head attention layer, and a feedforward neural network layer therein. The masked multi-head attention layer is similar to the multi-head attention layer, but the masked multi-head attention layer only focuses on the translation result before the current moment, and therefore needing to perform mask processing on the translation result after the current moment. The fused multi-head attention layer is also similar to the multi-head attention layer, but the fused multi-head attention layer uses the output of the feedforward neural network layer of the encoder corresponding to the serial number (referring to the result after residual connection and normalization) as an input, in addition to the output of the masked multi-head attention layer of the present decoder. Such design is to pay attention to the encoding information about the encoder, in other words, the decoder predicts the interaction features at the next moment by looking at the output of the encoder and the self-attention to the output thereof. The feedforward neural network layer of the decoder is similar to the feedforward neural network layer of the encoder, which will not be repeated here. Similarly, a residual structure is provided after the masked multi-head attention layer, the fused multi-head attention layer, and the feedforward neural network layer of the decoder, that is, the input and output of the current layer are residual connected (namely, concatenated) and normalized before being input into the next layer. The number of cascaded encoders is kept consistent with the number of cascaded decoders. The encoded features may be decoded by the N cascaded decoders, and the last decoder outputs the first interaction feature.

Step 305: The server fuses the picture feature with a part of the textual feature that is associated with the picture feature, to obtain a second interaction feature for the picture feature.

In some embodiments, a picture modality is used as a main modality that combines auxiliary information of a textual modality, that is, the server acquires a part of the textual feature and that is associated with the picture feature, and processes the picture feature and the part of the textual feature using a cross-modal interaction model to obtain the second interaction feature. In an embodiment, the cross-modal interaction model includes, but is not limited to a Transformers model or a variant of the Transformers model.

The above step 305 is similar to the above step 304, except that the main modality α is changed to the picture modality and the auxiliary modality β is changed to the textual modality, which will not be described in detail.

In the above process, the second interaction feature is directly output by the cross-modal Transformers model, which can reduce the computational complexity when acquiring the second interaction feature. In some embodiments, the feature output by the cross-modal Transformers model is used as an intermediate interaction feature, and the intermediate interaction feature is input into a basic Transformers model for encoding and then decoding, and finally the second interaction feature is output by the basic Transformers model. In an embodiment, the server inputs the intermediate interaction feature into a Transformers model including N cascaded encoders and N cascaded decoders. The N cascaded encoders are called to encode the intermediate interaction feature, and the feature obtained by encoding is input into the N cascaded decoders for decoding to obtain the first interaction feature. N is an integer greater than or equal to 1, for example, N = 6 or other values. The internal processing logic for each encoder and decoder in the basic Transformers model has been introduced in the above step 304, which will not be repeated here.

It is to be understood that in practical application, step 304 may be performed first and then step 305 may be performed; step 305 may be performed first and then step 304 may be performed; and step 304 and step 305 may be performed at the same time. The present disclosure does not make any limitation on the order of performing step 304 and step 305 herein.

Step 306: The server obtains a cross-modal interaction feature, that is, a combined interaction feature, by fusing the first interaction feature and the second interaction feature.

In some embodiments, the server may concatenate the first interaction feature and the second interaction feature to obtain a cross-modal interaction feature, thereby reducing the amount of computation in feature fusion.

In other embodiments, the server may add, multiply or bilinearly converge the first interaction feature and the second interaction feature by elements to make feature fusion more sufficient. The embodiments of the present disclosure do not specifically limit the feature fusion modes.

In the above steps 304 to 306, a possible implementation of the server acquiring cross-modal interaction features between two modalities in the case of two-modal fusion of textual modality and picture modality is shown. In the next embodiment, how the server acquires cross-modal interaction features between three modalities will be described for the case of three-modal fusion of a title modality, a text modality, and a picture modality, which will not be described in detail herein.

Step 307: The server determines an article classification to which the article belongs based on the cross-modal interaction feature.

The above step 307 is similar to the above step 205, and is not described in detail here.

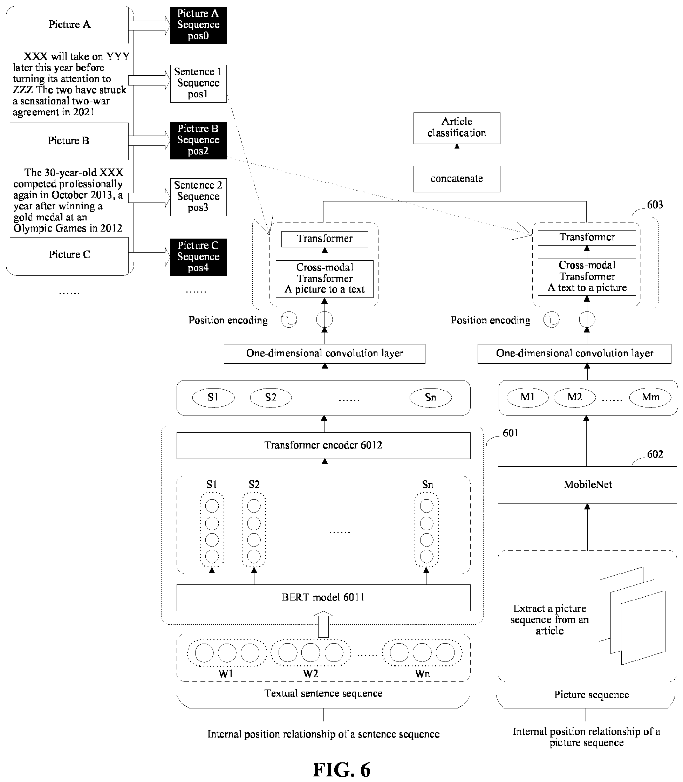

FIG. 6 is a diagram showing principle of a multi-modal fusion network incorporating relative position encoding according to an embodiment of the present disclosure. As shown in FIG. 6, the multi-modal fusion network includes a textual encoding model 601, a picture encoding model 602, and a cross-modal interaction portion 603.

In an embodiment, the textual encoding model 601 may be formed by cascading a BERT model 6011 obtained by finetuning a basic BERT model and an encoder 6012 of a Transformers model. A character sequence of textual data (referred to as a textual sentence sequence for short) is input into the BERT model 6011; a semantic vector sequence is output, and the semantic vector sequence is input into the encoder 6012 of the Transformers model; textual semantic features of the textual data are output, and the textual semantic features are input into a Conv1D layer for dimensional transformation before being concatenated with textual position features, to obtain a textual feature of the textual data.

In an embodiment, the picture encoding model 602 is a MobileNet model obtained by pre-training. A picture sequence of picture data is input into the picture encoding model 602; a picture depth feature of the picture data is output; the picture depth feature is input into the Conv1D layer for dimensional transformation before being concatenated with a picture position feature, to obtain a picture feature of the picture data.

In an embodiment, the cross-modal interaction portion 603 includes two cross-modal Transformers models and two basic Transformers models. Taking the textual modality as the main modality, the cross-modal Transformers model is used to extract intermediate interaction features from the picture modality to the textual modality; and the intermediate interaction features are input into the basic Transformers model for encoding and then decoding, to output the first interaction feature. Taking the picture modality as the main modality, the cross-modal Transformers model is used to extract intermediate interaction features from the textual modality to the picture modality; and the intermediate interaction features are input into the basic Transformers model for encoding and then decoding, to output the second interaction feature.

Further, the first interaction feature and the second interaction feature are concatenated to obtain a cross-modal interaction feature combining the two modalities. The cross-modal interaction feature is used to predict and obtain a final article classification to which the article belongs.

In some embodiments, if the relative position encoding mode introduced in the above step 303 is used, the absolute position feature of each Transformers model in the cross-modal interaction portion 603 needs to be modified into a relative position feature, for example, separating original character embedding vectors and position vectors, and converting the position vector of the absolute position encoding mode into the position vector of the relative position encoding mode after expanding the determinant, that is, fusing the relative position relationship into the self-attention layer when any two modalities perform interaction calculation.

In the Transformers model, the self-attention layer is usually represented as: $Attention \left(Q, K, V\right) = soft max \left(\frac{Q {K}^{T}}{\sqrt{{d}_{k}}}\right) V ,$

where Attention (Q, K, V) refers to an attention coefficient calculated based on a Query (Q) matrix, a Key (K) matrix, and a Value (V) matrix; softmax () refers to an exponential normalization function; Q refers to a Q matrix of a current character; K refers to a K matrix of the current character; V refers to a V matrix of the current character; K^{T} refers to a transpose matrix of the K matrix; and $1 / \sqrt{{d}_{k}}$ refers to a scaling factor.

Using the multiplicative distributive law expansion, the expansion formula of an attention coefficient ${A}_{i , j}^{abs}$ between an i^{th} element in modality 1 and a j^{th} element in modality 2 in the case of the absolute position encoding mode is as follows: ${A}_{i , j}^{abs} = {{{E}_{{x}_{i}}^{T} {W}_{q}^{T} {W}_{k} {E}_{{x}_{j}}}_{︸}}_{\left(a\right)} + {{{E}_{{x}_{i}}^{T} {W}_{q}^{T} {W}_{k} {U}_{j}}_{︸}}_{\left(b\right)} + {{{U}_{i}^{T} {W}_{q}^{T} {W}_{k} {E}_{{x}_{j}}}_{︸}}_{\left(c\right)} + {{{U}_{i}^{T} {W}_{q}^{T} {W}_{k} {U}_{j}}_{︸}}_{\left(d\right)}$

Where E represents a textual vector, U refers to a position vector, and W refers to a parameter matrix.

That is, ${E}_{{x}_{i}}^{T}$ represents a transpose matrix of a textual vector of the i^{th} element in modality 1; ${W}_{q}^{T}$ represents a transpose matrix of a parameter matrix of a Q matrix; ***W**ₖ* represents a parameter matrix of a K matrix; ***E**_{xⱼ}* represents a textual vector of the j^{th} element in modality 2; ***U**ᵢ* represents a position vector of the j^{th} element in modality 2; and ${U}_{i}^{T}$ represents a transpose matrix of a position vector of the i^{th} element in modality 1.

The position vector ***R**ᵢ₋ⱼ* of the relative position encoding mode is used to replace the position vectors ***U**ⱼ* and ***U**ᵢ* of the absolute position encoding mode. The above expansion formula may be transformed into: ${A}_{i , j}^{rel} = {{{E}_{{x}_{i}}^{T} {W}_{q}^{T} {W}_{k , E} {E}_{{x}_{j}}}_{︸}}_{\left(a\right)} + {{{E}_{{x}_{i}}^{T} {W}_{q}^{T} {W}_{k , R} {R}_{i - j}}_{︸}}_{\left(b\right)} + {{{u}^{T} {W}_{k , E} {E}_{{x}_{j}}}_{︸}}_{\left(c\right)} + {{{υ}^{T} {W}_{k , R} {R}_{i - j}}_{︸}}_{\left(d\right)}$

Where E represents a textual vector, U refers to a position vector, and W refers to a parameter matrix.

That is, ${E}_{{x}_{i}}^{T}$ represents a transpose matrix of a textual vector of the i^{th} element in the modality 1; ${W}_{q}^{T}$ represents a transpose matrix of a parameter matrix of a Q matrix; ***W**_{k,E}* represents a parameter matrix related to the K matrix and the textual vector under relative position encoding; ***E**_{xⱼ}* represents a textual vector of the j^{th} element in the modality 2; ***R**ᵢ₋ⱼ* represents a relative position encoding vector between the i^{th} element in the modality 1 and the j^{th} element in the modality 2; ***W**_{k,R}* represents a parameter matrix related to the K matrix and the relative position encoding vector under the relative position encoding; and ***u**^{T}*, ***v**^{T}* represent to-be-learned parameter vectors independent of the position of the i^{th} element in the modality 1.

All the above alternative technical solutions may be combined in any manner to form alternative embodiments of the present disclosure, which will not be repeated here.

The method according to the embodiments of the present disclosure, for textual data and picture data of an article, extracts a textual feature and a picture feature, respectively, and predicts an article classification to which the article belongs using a cross-modal interaction feature between the textual feature and picture feature. At the same time, the method considers the contribution degree of each of the textual modality and the picture modality to the article classification, rather than determining from a textual perspective only. In addition, the extracted cross-modal interaction feature is not a simple concatenation of the textual feature and the picture feature, which can reflect richer and deeper inter-modal interaction information, and help to improve the identification accuracy of the article classification. Furthermore, it can improve the discovering accuracy of high-quality articles in the scene of identifying high-quality articles.

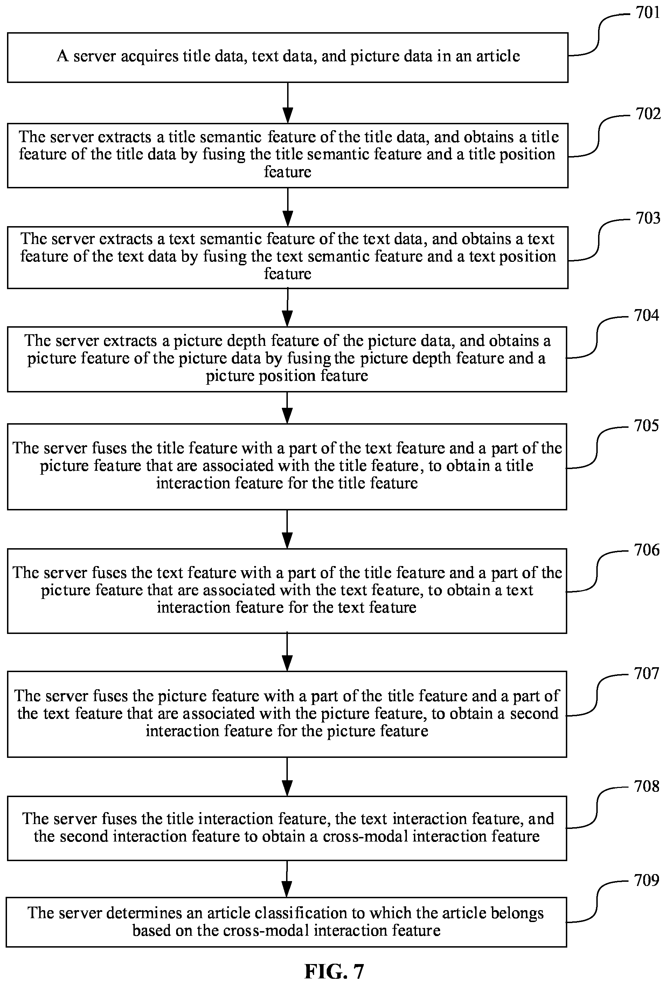

FIG. 7 is a flowchart of a data processing method according to an embodiment of the present disclosure. With reference to FIG. 7, the embodiment is performed by a computer device, illustrated with the computer device as a server. For the case where an article is divided into three modalities, namely, a title modality, a text modality, and a picture modality, the embodiment of the present disclosure will describe in detail how to identify an article classification of an article based on a three-modal fusion mode, including the following steps 701 to 709.

Step 701: The server obtains title data, text data, and picture data in the article.

Here, the title data and the text data may be collectively referred to as textual data.

The above step 701 is similar to the above step 301, which will not be repeated here. In an embodiment, after acquiring the textual data and the picture data, the server may further extract title data and text data from the textual data.

Step 702: The server extracts a title semantic feature of the title data, and obtains the title feature of the title data by fusing the title semantic feature and a title position feature.

In some embodiments, the server extracts the title semantic feature based on a title encoding model configured to extract the title semantic feature of the title data, that is, the server inputs the title data into the title encoding model and encodes the title data through the title encoding model to extract and obtain the title semantic feature. In an embodiment, the model structure of the title encoding model includes, but is not limited to a BERT model, a Transformers model, an ELMO model, a NNLM model, and the like. The embodiments of the present disclosure do not specifically limit the model structure of the title encoding model.

Schematically, illustrated with the title encoding model as a BERT model, assuming that the title data includes at least one title, the server may perform word segmentation on each title to obtain at least one character contained in each title, and arrange each character of each title according to the sequence appearing in the article thereof to form a character sequence, and add [SEP] as a sentence divider at the end of each title in the character sequence, and add [CLS] as a classifier at the top of the character sequence. The sentence divider is used for breaking between adjacent titles, and the classifier is used for characterizing the global semantic information of the whole character sequence.

The character sequence is input into a BERT model including an embedding layer and at least one bidirectional encoding layer. Each bidirectional encoding layer is configured to perform forward encoding and reverse encoding on an input signal, and the output of each bidirectional encoding layer serves as the input of the next bidirectional encoding layer, that is, each bidirectional encoding layers is connected in series. Each bidirectional encoding layer includes two parts, one part being an attention network, and the other part being a forward full-connection layer. Each hidden layer in the attention network is obtained by performing a weighted average on the hidden layers of the previous layer, so that each hidden layer may be directly associated with all the hidden layers of the previous layer. A hidden layer vector for characterizing global information may be obtained using the input long sequence information (namely, the character sequence). The forward full-connection layer is configured to further process the global information acquired by the attention network to enhance the learning capability of the whole BERT model.

In an embodiment, the character sequence may be firstly input into an embedding layer of the BERT model, and each character in the character sequence is embedded by the embedding layer, in other words, mapping each character to an embedding space to obtain an embedding vector of each character, namely, to obtain an embedding vector sequence. Then, the embedding vector sequence is input into the at least one bidirectional encoding layer, through which each embedding vector in the embedding vector sequence is bidirectional encoded (including forward encoding and reverse encoding), and a semantic vector of each character is output, that is, a semantic vector sequence is obtained. Finally, the title semantic feature of the title data is output via the last bidirectional encoding layer. Each character in the character sequence corresponds to an embedding vector in the embedding vector sequence, and each embedding vector in the embedding vector sequence corresponds to a semantic vector in the semantic vector sequence.

In the above process, forward encoding and reverse encoding are performed on the embedding vector sequence through a bidirectional encoding layer. Forward encoding enables the semantic vector corresponding to each character to fuse relevant information about characters appearing before the character, while reverse encoding enables the semantic vector corresponding to each character to fuse relevant information about characters appearing after the character. Two-way encoding operations can greatly improve the expression ability of the semantic vector of each character.

A first bidirectional encoding layer including an attention network and a forward full-connection layer is taken as an example for illustration. The embedding vector sequence is input into an attention network of a first bidirectional encoding layer, and weighted through the attention network to extract an attention feature sequence of the embedding vector sequence. The attention feature sequence is input into a forward full-connection layer of the first bidirectional encoding layer, and performed bidirectional semantic encoding (including forward encoding and reverse encoding) through the forward full-connection layer to output an implicit vector sequence, inputting the implicit vector sequence into a second bidirectional encoding layer, and so on. The processing logic of subsequent bidirectional encoding layers is similar to the first bidirectional encoding layer, which will not be repeated here. Finally, the title semantic feature of the title data is output by the last bidirectional encoding layer. Due to the introduction of the attention mechanism in the bidirectional encoding layer, it is possible to focus each character on a character that is more closely related to itself during each semantic encoding, so that the finally obtained semantic vectors for each character have a higher accuracy.

In some embodiments, the server may also acquire a title position feature of the title data, the title position feature characterizing a position sequence of each character in the title data. In an embodiment, position information about each character in the character sequence is encoded to obtain a title position feature of the title data. Then, the title semantic feature and the title position feature are concatenated to obtain the title feature of the title data.

In some embodiments, the server may encode position information about each character using an absolute position encoding mode or a relative position encoding mode. The embodiment of the present disclosure does not specifically limit the encoding modes of the position information. Both position encoding modes have been described in the previous embodiment, which will not be repeated here.

In some embodiments, if the dimension of the title semantic feature is different from that of the title position feature, the title semantic feature and the title position feature cannot be directly concatenated. A one-dimensional convolution (Conv1D) layer may be used to perform dimension transformation (namely, dimension increase or dimension decrease) on the title semantic feature, so that the dimension-transformed title semantic feature is the same as the dimension of the title position feature, thereby concatenating the dimension-transformed title semantic feature and the title position feature to obtain the title feature of the title data. The Conv1D layer refers to a convolution layer with a convolution kernel size of 1 by 1.

In some embodiments, the title semantic feature and the title position feature may also be fused, in addition to a concatenation mode, by means of element addition, element multiplication, bilinear fusion, and the like. The embodiments of the present disclosure do not specifically limit the fusion modes.

Step 703: The server extracts a text semantic feature of the text data, and obtains the text feature of the text data by fusing the text semantic feature and a text position feature.

In some embodiments, the server extracts the text semantic feature based on a text encoding model configured to extract the text semantic feature of the text data, that is, the server inputs the text data into the text encoding model and encodes the text data through the text encoding model to extract and obtain the text semantic feature. In an embodiment, a model structure of the text encoding model includes, but is not limited to, any one or a combination of at least two of the following: a BERT model, a Transformers model, an ELMO model, a NNLM model, and the like. The embodiments of the present disclosure do not specifically limit the model structure of the text encoding model. Schematically, the text encoding model may be formed by cascading the encoders of the BERT model and the Transformers model. The processing of text data by such structured text encoding model is similar to the processing of textual data by the textual encoding model in the above step 302, which will not be repeated here.

In some embodiments, the server may also acquire a text position feature of the text data, the text position feature characterizing a position sequence of each character in the text data. In an embodiment, position information about each character in the character sequence is encoded to obtain a text position feature of the text data. Then, the text semantic feature and the text position feature are concatenated to obtain the textual feature of the text data.

In some embodiments, the server may encode position information about each character using an absolute position encoding mode or a relative position encoding mode. The embodiment of the present disclosure does not specifically limit the encoding modes of the position information. Both position encoding modes have been described in the previous embodiment, which will not be repeated here.

In some embodiments, if the dimension of the text semantic feature is different from that of the text position feature, the text semantic feature and the text position feature cannot be directly concatenated. A one-dimensional convolution (Conv1D) layer may be used to perform dimension transformation (namely, dimension increase or dimension decrease) on the text semantic feature, so that the dimension-transformed text semantic feature is the same as the dimension of the text position feature, thereby concatenating the dimension-transformed text semantic feature and the text position feature to obtain the text feature of the text data. The Conv1D layer refers to a convolution layer with a convolution kernel size of 1 by 1.

In some embodiments, the text semantic feature and the text position feature may also be fused, in addition to a concatenation mode, by means of element addition, element multiplication, bilinear fusion, and the like. The embodiments of the present disclosure do not specifically limit the fusion modes.

In the above steps 702 to 703, a possible embodiment is provided that in the case of dividing the textual data into title data and text data, the server extracts the textual semantic feature of the textual data, and fuses the textual semantic feature and the textual position feature to obtain the textual feature of the textual data. By dividing the textual data into title data and text data, more and richer feature information can be extracted.

Step 704: The server extracts a picture depth feature of the picture data, and obtains the picture feature of the picture data by fusing the picture depth feature and a picture position feature.

The above step 704 is similar to the above step 303, and will not be described in detail here.

It is to be understood that in practical application, the performing order between the above steps 702, 703, and 704 may be adjusted according to practical requirements. The present disclosure does not make any limitation on the order of performing steps 702, 703, and 704.

Step 705: The server fuses the title feature with a part of the text feature and a part of the picture feature that are associated with the title feature, to obtain the title interaction feature for the title feature.

In some embodiments, the server determines a first title interaction feature based on a part of the text feature that is associated with the title feature, that is, receives auxiliary information of the text modality with the title modality as the main modality. In an embodiment, the server acquires a part of the text feature that is associated with the title feature, and processes the title feature and the part of the text feature using a cross-modal interaction model to obtain the first title interaction feature. In an embodiment, the cross-modal interaction model includes, but is not limited to a Transformers model or a variant of the Transformers model. For example, the cross-modal interaction model may be a cross-modal Transformers model, where the main modality α is determined as a title modality, and the auxiliary modality β is determined as a text modality. The model structure and processing logic are similar to the above step 304, which will not be repeated here.

In some embodiments, the server fuses the title feature with a part of the picture feature that is associated with the title feature, to obtain a first title interaction feature, that is, receives auxiliary information of the picture modality with the title modality as the main modality. In an embodiment, the server acquires a part of the picture feature that is associated with the title feature, and processes the title feature and the part of the picture feature using a cross-modal interaction model to obtain the second title interaction feature. In an embodiment, the cross-modal interaction model includes, but is not limited to a Transformers model or a variant of the Transformers model. For example, the cross-modal interaction model may be a cross-modal Transformers model, where the main modality α is determined as a title modality, and the auxiliary modality β is determined as a picture modality. The model structure and processing logic are similar to the above step 304, which will not be repeated here.

In some embodiments, the server concatenates the first title interaction feature and the second title interaction feature to obtain a third title interaction feature, which can reduce the computational complexity when fusing the first title interaction feature and the second title interaction feature. In an embodiment, fusion modes such as element addition, element multiplication, and bilinear fusion can also be adopted, which is not specifically limited by the embodiments of the present disclosure.

In some embodiments, the server encodes and decodes the third title interaction feature to obtain the title interaction feature. In an embodiment, the server inputs the third title interaction feature into a Transformers model including N cascaded encoders and N cascaded decoders. The N cascaded encoders are called to encode the third title interaction feature to obtain an intermediate title interaction feature. The intermediate title interaction feature is input into the N cascaded decoders for decoding to obtain the title interaction feature. N is an integer greater than or equal to 1, for example, N = 6 or other values.

In some embodiments, each encoder in the N cascaded encoders includes a multi-head attention layer and a feedforward neural network layer therein, where the multi-head attention layer is configured to comprehensively extract the correlation between each character in the title data from multiple expression subspaces, and the feedforward neural network layer is configured to perform full connection on feature vectors output by the multi-head attention layer. A residual structure is provided after the multi-head attention layer and the feedforward neural network layer, that is, performing residual connection (namely, concatenation) on an input and an output of a current layer before inputting into a next layer after normalization. The input vectors are encoded by the N cascaded encoders, and the intermediate title interaction feature is output by the last encoder.

Next, the intermediate title interaction feature is input to the N cascaded decoders. Each decoder of the N cascaded decoders includes a masked multi-head attention layer, a fused multi-head attention layer, and a feedforward neural network layer therein. The masked multi-head attention layer is similar to the multi-head attention layer, but the masked multi-head attention layer only focuses on the translation result before the current moment, and therefore needing to perform mask processing on the translation result after the current moment. The fused multi-head attention layer is also similar to the multi-head attention layer, but the fused multi-head attention layer uses the output of the feedforward neural network layer of the encoder corresponding to the serial number (referring to the result after residual connection and normalization) as an input, in addition to the output of the masked multi-head attention layer of the present decoder. Such design is to pay attention to the encoding information about the encoder, in other words, the decoder predicts the interaction features at the next moment by looking at the output of the encoder and the self-attention to the output thereof. The feedforward neural network layer of the decoder is similar to the feedforward neural network layer of the encoder, which will not be repeated here. Similarly, a residual structure is provided after the masked multi-head attention layer, the fused multi-head attention layer, and the feedforward neural network layer of the decoder, that is, the input and output of the current layer are residual connected (namely, concatenated) and normalized before being input into the next layer. The number of cascaded encoders is kept consistent with the number of cascaded decoders. The intermediate title interaction feature may be decoded by N cascaded decoders, and the final title interaction feature is output by the last decoder.

Step 706: The server fuses the text feature with a part of the title feature and a part of the picture feature that are associated with the text feature, to obtain a text interaction feature for the text feature.

Since the first interaction feature includes a title interaction feature and a text interaction feature in the case of three-modal fusion of title modality, text modality, and picture modality, steps 705 to 706 show possible implementations of how to acquire the first interaction feature.

In some embodiments, the server fuses the text feature with a part of the title feature that is associated with the text feature, to obtain a first text interaction feature, that is, receives auxiliary information of the title modality with the text modality as the main modality. In an embodiment, the server acquires a part of the title feature that is associated with the text feature, and processes the text feature and the part of the title feature using a cross-modal interaction model to obtain the first text interaction feature. In an embodiment, the cross-modal interaction model includes, but is not limited to a Transformers model or a variant of the Transformers model. For example, the cross-modal interaction model may be a cross-modal Transformers model, where the main modality α is determined as a text modality, and the auxiliary modality β is determined as a title modality. The model structure and processing logic are similar to the above step 304, which will not be repeated here.

In some embodiments, the server fuses the text feature with a part of the picture feature that is associated with the text feature, to obtain a second text interaction feature, that is, receives auxiliary information of the picture modality with the text modality as the main modality. In an embodiment, the server acquires a part of the picture feature that is associated with the text feature, and processes the text feature and the part of the picture feature using a cross-modal interaction model to obtain the second text interaction feature. In an embodiment, the cross-modal interaction model includes, but is not limited to a Transformers model or a variant of the Transformers model. For example, the cross-modal interaction model may be a cross-modal Transformers model, where the main modality α is determined as a text modality, and the auxiliary modality β is determined as a picture modality. The model structure and processing logic are similar to the above step 304, which will not be repeated here.

In some embodiments, the server concatenates the first text interaction feature and the second text interaction feature to obtain a third text interaction feature, which can reduce the computational complexity when fusing the first text interaction feature and the second text interaction feature. In an embodiment, fusion modes such as element addition, element multiplication, and bilinear fusion may also be adopted, which is not specifically limited by the embodiments of the present disclosure.

In some embodiments, the server encodes and decodes the third text interaction feature to obtain the text interaction feature. In an embodiment, the server inputs the third text interaction feature into a Transformers model, encodes the third text interaction feature through N cascaded encoders in the Transformers model to obtain an intermediate text interaction feature, and inputs the intermediate text interaction feature into N cascaded decoders for decoding to obtain the text interaction feature. N is an integer greater than or equal to 1, for example, N = 6 or other values. The internal processing logic of the encoder and decoder of the Transformers model has been described in detail in the above step 705, which will not be repeated here.

Step 707: The server fuses the picture feature with a part of the title feature and a part of the text feature that are associated with the picture feature, to obtain a second interaction feature for the picture feature.

In some embodiments, the server fuses the picture feature with a part of the title feature that is associated with the picture feature, to obtain a first picture interaction feature, that is, receives auxiliary information of the title modality with the picture modality as the main modality. In an embodiment, the server acquires a part of the title feature that is associated with the picture feature, and processes the picture feature and the part of the title feature using a cross-modal interaction model to obtain the first picture interaction feature. In an embodiment, the cross-modal interaction model includes, but is not limited to a Transformers model or a variant of the Transformers model. For example, the cross-modal interaction model may be a cross-modal Transformers model, where the main modality α is determined as a picture modality, and the auxiliary modality β is determined as a title modality. The model structure and processing logic are similar to the above step 304, which will not be repeated here.

In some embodiments, the server fuses the picture feature with a part of the text feature that is associated with the picture feature, to obtain a second picture interaction feature, that is, receives auxiliary information of the text modality with the picture modality as the main modality. In an embodiment, the server acquires a part of the text feature that is associated with the picture feature, and processes the picture feature and the part of the text feature using a cross-modal interaction model to obtain the second picture interaction feature. In an embodiment, the cross-modal interaction model includes, but is not limited to a Transformers model or a variant of the Transformers model. For example, the cross-modal interaction model may be a cross-modal Transformers model, where the main modality α is determined as a picture modality, and the auxiliary modality β is determined as a text modality. The model structure and processing logic are similar to the above step 304, which will not be repeated here.

In some embodiments, the server concatenates the first picture interaction feature and the second picture interaction feature to obtain a third picture interaction feature, which can reduce the computational complexity when fusing the first picture interaction feature and the second picture interaction feature. In an embodiment, fusion modes such as element addition, element multiplication, and bilinear fusion may also be adopted, which is not specifically limited by the embodiments of the present disclosure.

In some embodiments, the server encodes and decodes the third picture interaction feature to obtain the second interaction feature. In an embodiment, the server inputs the third picture interaction feature into a Transformers model, encodes the third picture interaction feature through N cascaded encoders in the Transformers model to obtain an intermediate picture interaction feature, and inputs the intermediate picture interaction feature into N cascaded decoders for decoding to obtain the second interaction feature. N is an integer greater than or equal to 1, for example, N = 6 or other values. The internal processing logic of the encoder and decoder of the Transformers model has been described in detail in the above step 705, which will not be repeated here.

It is to be understood that in practical application, the performing order between the above steps 705, 706, and 707 may be adjusted according to practical requirements. The present disclosure does not make any limitation on the order of performing steps 705, 706, and 707.

Step 708: The server fuses the title interaction feature, the text interaction feature, and the second interaction feature to obtain a combined interaction feature, that is a cross-modal interaction feature.

In some embodiments, the server concatenates the title interaction feature, the text interaction feature, and the second interaction feature to obtain a final cross-modal interaction feature between the three modalities, thereby reducing the amount of computation in feature fusion.

In other embodiments, the server may fuse the title interaction feature, the text interaction feature, and the second interaction feature by means of element addition, element multiplication or bilinear fusion, and the like, so that the feature can be fused more fully. The embodiments of the present disclosure do not specifically limit the feature fusion mode.

In the above steps 705 to 708, a possible embodiment of the server acquiring cross-modal interaction features is provided, namely, by dividing the textual data into title data and text data, thereby expanding the original two-modal fusion into three-modal fusion, which can make full use of the sequence-level interaction information between the modalities to perform directional cross-modal attention weighting on a pair-wise combination (a total of six combination modes) of the three modalities of the title modality, the text modality, and the picture modality. Each modality will receive auxiliary information about the other two modalities as a main modality, thus greatly improving the expression ability of the finally acquired cross-modal interaction features, as well as the prediction accuracy based on cross-modal interaction features.

Step 709: The server determines an article classification to which the article belongs based on the cross-modal interaction feature.

The above step 709 is similar to the above step 205, which will not be repeated here.

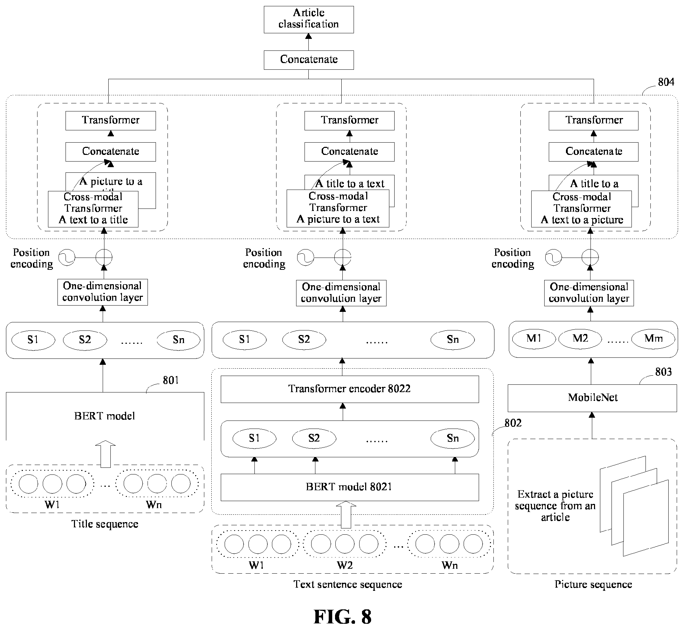

FIG. 8 is a diagram showing principle of a multi-modal fusion network according to an embodiment of the present disclosure. As shown in FIG. 8, the multi-modal fusion network includes a title encoding model 801, a text encoding model 802, a picture encoding model 803, and a cross-modal interaction portion 804.

Schematically, the title encoding model 801 is a BERT model obtained by finetuning a basic BERT model. A character sequence of title data (referred to as a title sequence for short) is input into the title encoding model 801; title semantic features of the title data are output; the title semantic features are input into a Conv1D layer for dimensional transformation before being concatenated with title position features, to obtain a title feature of the title data.

Schematically, the text encoding model 802 is formed by cascading a BERT model 8021 obtained by finetuning and an encoder 8022 of the Transformers model. A character sequence of text data (referred to as a text sentence sequence for short) is input into the BERT model 8021; a semantic vector sequence is output, and the semantic vector sequence is input into the encoder 8022 of the Transformers model; text semantic features of the text data are output, and the text semantic features are input into the Conv1D layer for dimensional transformation before being concatenated with text position features, to obtain a text feature of the text data.

Schematically, the picture encoding model 803 is a MobileNet model obtained by pre-training. A picture sequence of picture data is input into the picture encoding model 803; a picture depth feature of the picture data is output; the picture depth feature is input into the Conv1D layer for dimensional transformation before being concatenated with a picture position feature, to obtain a picture feature of the picture data.

Schematically, the cross-modal interaction portion 804 includes six cross-modal Transformers models and three basic Transformers models. Taking the title modality as the main modality, the cross-modal Transformers model is used to extract a first title interaction feature from a text modality to a title modality and a second title interaction feature from a picture modality to the title modality; the first title interaction feature and the second title interaction feature are concatenated to obtain a third title interaction feature; the third title interaction feature is input into the Transformers model foe encoding and then decoding, to output the title interaction feature. In addition, taking the text modality as the main modality, the cross-modal Transformers model is used to extract a first text interaction feature from a title modality to a text modality and a second text interaction feature from a picture modality to the text modality; the first text interaction feature and the second text interaction feature are concatenated to obtain a third text interaction feature; the third text interaction feature is input into the Transformers model for encoding and then decoding, to output the text interaction feature. In addition, taking the picture modality as the main modality, the cross-modal Transformers model is used to extract a first picture interaction feature from a title modality to a picture modality and a second picture interaction feature from a text modality to the picture modality; the first picture interaction feature and the second picture interaction feature are concatenated to obtain a third picture interaction feature; the third picture interaction feature is input into the Transformers model for encoding and then decoding, to output the second interaction feature.

Further, the title interaction feature, the text interaction feature, and the second interaction feature are concatenated to obtain a final cross-modal interaction feature between the three modalities. The final cross-modal interaction feature is used to predict a final article classification to which the article belongs. It should be noted that in the case of three-modal fusion, relative position encoding mode may also be introduced in a similar manner as in the above embodiments, which will not be repeated here.

The traditional multi-modal fusion mode, due to different sampling rates of each modality, cannot improve such two problems as the data of each modality being essentially non-aligned, and a long dependence between the elements of different modalities. Therefore, its identification accuracy of the article classification is low. However, the above multi-modal fusion network constructs a cross-modal interaction method under the non-aligned condition of picture-textual quality identification, is able to make full use of the sequence-level interaction information between the modalities aiming at the cross-modal interaction portion of the three modalities, continues to model a self-attention-based Transformers model combined with the context after the fusion of information about the two modalities by cross-modal interaction models of each of the six combination modes, and finally concatenates three groups of features (the title interaction feature, the text interaction feature, and the second interaction feature) for prediction. Through the vertical contrast experiment, it is found that the model effect is the best under the combined scene of title, text, and picture, that is, the interaction information between any two modalities can significantly enhance the model effect.

The above multi-modal fusion network combined with the relative position encoding mode may be applied to the identification of high-quality picture-textual scenes, and the modal interactivity between adjacent picture-text is crucial in this scene. Meanwhile, by introducing the relative position encoding mode, the learning of the relative position relationship between a textual sequence and a picture sequence can be enhanced, thereby improving the identification accuracy of the overall model. In addition, in the media era, there are many factors affecting the quality assessment of the article. In addition to the textual quality, the overall collocation effect between pictures and text is also crucial. The above multi-modal fusion network combined with the relative position encoding mode completes the construction of the multi-modal module in scenes of picture-textual quality identification.

In the test task of determining the quality of picture-textual content in a content center, the accuracy rate of model evaluation reaches 95%. However, the traditional supervised means for identifying high-quality picture-text, for example, when determining the quality of content only from the perspective of text, or when determining the quality of content after simply concatenating a textual embedding and a picture embedding, the dimensions considered therein are very single, and cannot learn the modal interaction information between adjacent text and picture, with the result that the overall accuracy rate is lower than 95%. Therefore, the method according to the embodiment of the present disclosure can greatly improve the identification accuracy for article classifications.

In addition, in the above test tasks, the coverage rate of the picture-textual high-quality content reaches 17%. By performing a weighted recommendation experiment on the identified picture-textual high-quality content at the browser side, the high-quality content with good picture-textual collocation effect and excellent experience is preferentially recommended to the user, and a good service effect is obtained at the service side relative to the historical application version. Schematically, in a content processing link of a content center, content quality scores are performed on all the picture-textual contents, then the contents are ex-warehoused and distributed to a terminal side, and the terminal side performs hierarchical recommendation weighting according to the content quality scores, for example, performing recommendation weighting on identified high-quality contents, performing recommendation and weight reduction on low-quality contents, and the like. This recommendation method can effectively improve the user's reading experience, and is an innovation of recommendation algorithm based on specific business scenarios.

In addition, after performing a weighted recommendation experiment of high-quality content using the picture-textual prior high-quality identification algorithm provided in the embodiment of the present disclosure, the overall click page view (PV) on the browser side improves by 0.38%, the exposure efficiency improves by 0.43%, the click-through-rate (CTR) improves by 0.394%, and the user's stay time improves by 0.17%. At the same time, the next day retention of daily active user (DAU) increases by 0.165%. Per capita share increases by 1.705%, per capita commendation increases by 4.215%, and per capita comment increases by 0.188% in the interactive indicator data.

All the above alternative technical solutions can be combined in any manner to form alternative embodiments of the present disclosure, which will not be repeated here.

The method according to the embodiments of the present disclosure, for textual data and picture data of an article, extracts a textual feature and a picture feature, respectively, and predicts an article classification to which the article belongs using a cross-modal interaction feature between the textual feature and picture feature. At the same time, the method considers the contribution degree of each of the textual modality and the picture modality to the article classification, rather than determining from a textual perspective only. In addition, the extracted cross-modal interaction feature is not a simple concatenation of the textual feature and the picture feature, which can reflect richer and deeper inter-modal interaction information, and help to improve the identification accuracy of the article classification. Furthermore, it can improve the discovering accuracy of high-quality articles in the scene of identifying high-quality articles.

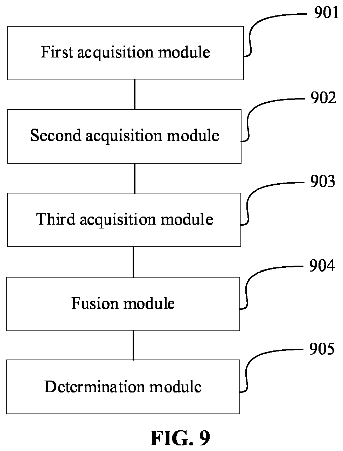

FIG. 9 is a structural diagram of a data processing apparatus according to an embodiment of the present disclosure. Referring to FIG. 9, the apparatus includes:
a first acquisition module 901, configured to acquire a textual feature and a picture feature of an article, the textual feature characterizing textual data in the article, and the picture feature characterizing picture data in the article;
a second acquisition module 902, configured to fuse the textual feature with a part of the picture feature that is associated with the textual feature, to obtain a first interaction feature for the textual feature;
a third acquisition module 903, configured to fuse the picture feature with a part of the textual feature that is associated with the picture feature to obtain a second interaction feature for the picture feature;
a fusion module 904, configured to fuse the first interaction feature and the second interaction feature to obtain a combined interaction feature; and
a determination module 905, configured to determine an article classification to which the target article belongs based on the cross-modal interaction feature.

The apparatus according to the embodiments of the present disclosure, for textual data and picture data of an article, extracts a textual feature and a picture feature, respectively, and predicts an article classification to which the article belongs using a cross-modal interaction feature between the textual feature and picture feature. At the same time, the method considers the contribution degree of each of the textual modality and the picture modality to the article classification, rather than determining from a textual perspective only. In addition, the extracted cross-modal interaction feature is not a simple concatenation of the textual feature and the picture feature, which can reflect richer and deeper inter-modal interaction information, and help to improve the identification accuracy of the article classification. Furthermore, it can improve the discovering accuracy of high-quality articles in the scene of identifying high-quality articles.

In a possible embodiment, based on the apparatus composition of FIG. 9, the first acquisition module 901 includes:
a first extraction and fusion unit, configured to extract a textual semantic feature of the textual data, and obtain the textual feature by fusing the textual semantic feature and a textual position feature; and
a second extraction and fusion unit, configured to extract a picture depth feature of the picture data, and obtain the picture feature by fusing the picture depth feature and a picture position feature.

In one possible embodiment, the textual data includes title data and text data. The textual feature includes a title feature and a text feature.

The first extraction and fusion unit is configured to
extract a title semantic feature of the title data and a text semantic feature of the text data;
obtain the title feature by fusing the title semantic feature and a title position feature; and
obtain the text feature by fusing the text semantic feature and a text position feature.

In a possible embodiment, the first interaction feature includes a title interaction feature and a text interaction feature. Based on the apparatus composition of FIG. 9, the second acquisition module 902 includes:
a first acquisition unit, configured to fuse the title feature with a part of the text feature and a part of the picture feature that are associated with the title feature, to obtain the title interaction feature for the title feature; and
a second acquisition unit, configured to fuse the text feature with a part of the title feature and a part of the picture feature that are associated with the text feature, to obtain the text interaction feature for the text feature.

In a possible embodiment, the first acquisition unit is configured to:
fuse the title feature with the part of the text feature that is associated with the title feature, to obtain a first title interaction feature;
fuse the title feature with the part of the picture feature that is associated with the title feature, to obtain a second title interaction feature;
obtain a third title interaction feature by concatenating the first title interaction feature and the second title interaction feature; and
obtain the title interaction feature by encoding and decoding the third title interaction feature.

In a possible embodiment, the second acquisition unit is configured to:
fuse the text feature with the part of the title feature that is associated with the text feature, to obtain a first text interaction feature;
fuse the text feature with the part of the picture feature that is associated with the text feature, to obtain a second text interaction feature;
obtain a third text interaction feature by concatenating the first text interaction feature and the second text interaction feature; and
obtain the text interaction feature by encoding and decoding the third text interaction feature.

In a possible embodiment, based on the apparatus composition of FIG. 9, the third acquisition module 903 includes:
a third acquisition unit, configured to fuse the picture feature with a part of the text feature and a part of the title feature that are associated with the picture feature, to obtain the second interaction feature for the picture feature.

In a possible embodiment, the third acquisition unit is configured to:
fuse the picture feature with the part of the title feature that is associated with the picture feature, to obtain a first picture interaction feature;
fuse the picture feature with the part of the text feature that is associated with the picture feature, to obtain a second picture interaction feature;
obtain a third picture interaction feature by concatenating the first picture interaction feature and the second picture interaction feature; and
obtain the second interaction feature by encoding and decoding the third picture interaction feature.

In one possible implementation, the textual position feature and the picture position feature are both relative position features between the textual data and the picture data, the relative position features characterizing an order in which the textual data and the picture data appears in the article and a distance between the textual data and the picture data.

In a possible embodiment, the determination of the relative position features includes:
determining position information of multiple texts in the textual data and multiple pictures in the picture data in the article;
constructing a relative position encoding matrix based on the position information, any element in the relative position encoding matrix characterizing relative position information between a text corresponding to a column to which the element belongs and a picture corresponding to a row to which the element belongs; and
determining a relative position feature between any of the multiple texts and any of the multiple pictures based on the relative position encoding matrix.

In one possible embodiment, the determination module 905 is configured to:
obtain a full-connection feature by performing full-connection processing on the cross-modal interaction feature;
obtain a probability prediction result of the article by performing exponential normalization on the full-connection feature, the probability prediction result including multiple prediction probabilities, and the multiple prediction probabilities corresponding to multiple classifications; and
determine the classification corresponding to the prediction probability of meeting a target condition as an article classification to which the article belongs.

All the above alternative technical solutions may be combined in any manner to form alternative embodiments of the present disclosure, which will not be repeated here.

It should be noted that the data processing apparatus provided in the above embodiments only exemplifies the division of the above functional modules when processing data. In practical application, the above functional allocation may be performed by different functional modules according to needs, that is, dividing the internal structure of a computer device into different functional modules to perform all or part of the functions described above. In addition, the above embodiment provides a data processing apparatus which belongs to the same concept as the embodiment of the data processing method, and the detailed implementation process thereof is described in detail in the embodiment of the data processing method, which will not be repeated here.

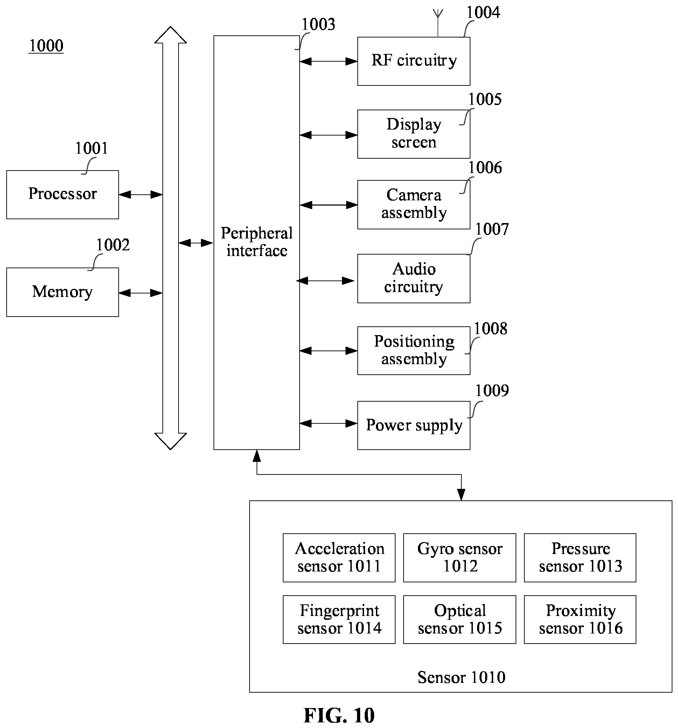

FIG. 10 is a structural diagram of a computer device according to an embodiment of the present disclosure. With reference to FIG. 10, illustrated with the computer device as a terminal 1000, the terminal 1000 may independently complete the process of identifying the article classification of the article. In an embodiment, the device types of the terminal 1000 include smart phone, tablet, moving picture experts group audio layer III (MP3 player), moving picture experts group audio layer IV (MP4 player), laptop or desktop. The terminal 1000 may also be referred to as another name such as user equipment, a portable terminal, a laptop terminal, or a desktop terminal.

Generally, the terminal 1000 includes a processor 1001 and a memory 1002.

In an embodiment, the processor 1001 includes one or more processing cores, for example, a 4-core processor or an 8-core processor. In an embodiment, the processor 1001 is implemented in hardware in the form of at least one of digital signal processing (DSP), field-programmable gate array (FPGA), and programmable logic array (PLA). In some embodiments, the processor 1001 includes a main processor and a co-processor, where the main processor is a processor for processing data in a wake-up state, also referred to as central processing unit (CPU); a co-processor is a low-power processor for processing data in a standby state. In some embodiments, the processor 1001 is integrated with graphics processing unit (GPU), the GPU being responsible for rendering and drawing the content required by a display screen. In some embodiments, processor 1001 further includes an Artificial Intelligence (AI) processor for processing computing operations related to machine learning.

In some embodiments, the memory 1002 includes one or more computer-readable storage media. In an embodiment, the computer-readable storage medium is non-transitory. In an embodiment, the memory 1002 further includes a high-speed random-access memory, as well as a non-volatile memory, such as one or more disk storage devices and flash storage devices. In some embodiments, a non-transitory computer-readable storage medium in the memory 1002 is used for storing at least one program code executed by the processor 1001 to perform data processing methods according to various embodiments of the present disclosure.

In some embodiments, the terminal 1000 may include a peripheral interface 1003 and at least one peripheral. The processor 1001, the memory 1002, and the peripheral interface 1003 may be connected by a bus or signal line. Each device may be connected to the peripheral interface 1003 by a bus, signal line, or circuit board. In an embodiment, the device includes at least one of radio frequency (RF) circuitry 1004, display screen 1005, camera assembly 1006, audio circuitry 1007, positioning assembly 1008, and power supply 1009.

In some embodiments, the terminal 1000 further includes one or more sensors 1010. The one or more sensors 1010 include, but are not limited to an acceleration sensor 1011, a gyro sensor 1012, a pressure sensor 1013, a fingerprint sensor 1014, an optical sensor 1015, and a proximity sensor 1016.

Those skilled in the art will appreciate that the structure shown in FIG. 10 is not limiting of the terminal 1000 and may include more or fewer assemblies than shown, or combine certain assemblies, or employ different assembly arrangements.

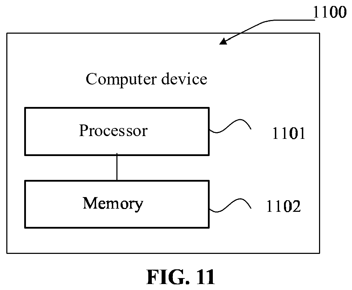

FIG. 11 is a structural diagram of a computer device according to an embodiment of the present disclosure. The computer device 1100 may be widely different due to different configurations or performances. The computer device 1100 includes one or more processors 1101 and one or more memories 1102, where at least one computer program is stored in the memory 1102, and the at least one computer program is loaded and executed by the one or more processors 1101 to implement the data processing method according to the various embodiments. In an embodiment, the computer device 1100 also has components such as a wired or wireless network interface, a keyboard, and an input and output interface for input and output. The computer device 1100 further includes other components for implementing device functions, which will not be described in detail herein.

In an exemplary embodiment, there is also provided a computer-readable storage medium, such as a memory including at least one computer program executable by a processor in a terminal to perform the data processing method in the various above embodiments. For example, the computer-readable storage medium includes a read-only memory (ROM), a random-access memory (RAM), a compact disc read-only memory (CD-ROM), a magnetic tape, a floppy disk, an optical data storage device, and the like.

In an exemplary embodiment, there is also provided a computer program product or computer program including one or more program codes stored in a computer-readable storage medium. The one or more processors of the computer device may read the one or more program codes from the computer-readable storage medium, and the one or more processors execute the one or more program codes, enabling the computer device to execute the data processing method in the above embodiments.

Those ordinarily skilled in the art will appreciate that all or a part of the steps for implementing the above embodiments may be performed by hardware, and may alternatively be performed by program to instruct the relevant hardware. The program is stored in a computer-readable storage medium. In an embodiment, the storage medium mentioned above is a ROM, a magnetic or optical disk, and the like.

## Claims

1. A data processing method executable by a computer device, comprising:
acquiring a textual feature and a picture feature of an article, the textual feature characterizing textual data in the article, and the picture feature characterizing picture data in the article;
fusing the textual feature with a part of the picture feature that is associated with the textual feature, to obtain a first interaction feature, by using a cross-modal interaction model which is configured to combine a textual modality associated to the textual feature as a first main modality and auxiliary information of a picture modality associated to the part of the picture feature as a first auxiliary modality;
fusing the picture feature with a part of the textual feature that is associated with the picture feature, to obtain a second interaction feature, by using the cross-modal interaction model which is configured to combine the picture modality associated to the picture feature as a second main modality and auxiliary information of a textual modality associated to the part of the textual feature as a second auxiliary modality; and
obtaining a combined interaction feature by fusing the first interaction feature and the second interaction feature, the combined interaction feature being used for classifying the article.

2. The method according to claim 1, wherein the acquiring a textual feature and a picture feature of an article comprises:
extracting a textual semantic feature of the textual data, and obtaining the textual feature by fusing the textual semantic feature and a textual position feature; and
extracting a picture depth feature of the picture data, and obtaining the picture feature by fusing the picture depth feature and a picture position feature.

3. The method according to claim 2, wherein the textual data comprises title data and text data; the textual feature comprises a title feature and a text feature;
the extracting a textual semantic feature of the textual data comprises:
extracting a title semantic feature of the title data and a text semantic feature of the text data; and
the obtaining the textual feature by fusing the textual semantic feature and a textual position feature comprises:
obtaining the title feature by fusing the title semantic feature and a title position feature; and
obtaining the text feature by fusing the text semantic feature and a text position feature.

4. The method according to claim 3, wherein the first interaction feature comprises a title interaction feature and a text interaction feature, and the fusing the textual feature with a part of the picture feature that is associated with the textual feature to obtain a first interaction feature comprises:
fusing the title feature with a part of the text feature and a part of the picture feature that are associated with the title feature, to obtain the title interaction feature; and
fusing the text feature with a part of the title feature and a part of the picture feature that are associated with the text feature, to obtain the text interaction feature.

5. The method according to claim 4, wherein the fusing the title feature with a part of the text feature and a part of the picture feature that are associated with the title feature, to obtain the title interaction feature comprises:
fusing the title feature with the part of the text feature that is associated with the title feature, to obtain a first title interaction feature;
fusing the title feature with the part of the picture feature that is associated with the title feature, to obtain a second title interaction feature;
obtaining a third title interaction feature by concatenating the first title interaction feature and the second title interaction feature; and
obtaining the title interaction feature by encoding and decoding the third title interaction feature.

6. The method according to claim 4, wherein the fusing the text feature with a part of the title feature and a part of the picture feature that are associated with the text feature, to obtain the text interaction feature comprises:
fusing the text feature with the part of the title feature that is associated with the text feature, to obtain a first text interaction feature;
fusing the text feature with the part of the picture feature that is associated with the text feature, to obtain a second text interaction feature;
obtaining a third text interaction feature by concatenating the first text interaction feature and the second text interaction feature; and
obtaining the text interaction feature by encoding and decoding the third text interaction feature.

7. The method according to claim 3, wherein the fusing the picture feature and a part of the textual feature that is associated with the picture feature to obtain a second interaction feature comprises:
fusing the picture feature with a part of the text feature and a part of the title feature that are associated with the picture feature, to obtain the second interaction feature.

8. The method according to claim 7, wherein the fusing the picture feature with a part of the text feature and a part of the title feature that are associated with the picture feature, to obtain the second interaction feature comprises:
fusing the picture feature with the part of the title feature that is associated with the picture feature, to obtain a first picture interaction feature;
fusing the picture feature with the part of the text feature that is associated with the picture feature, to obtain a second picture interaction feature;
obtaining a third picture interaction feature by concatenating the first picture interaction feature and the second picture interaction feature; and
obtaining the second interaction feature by encoding and decoding the third picture interaction feature.

9. The method according to claim 2, wherein each of the textual position feature and the picture position feature is a relative position feature between the textual data and the picture data, the relative position feature characterizing an order in which the textual data and the picture data appear in the article and a distance between the textual data and the picture data.

10. The method according to claim 9, wherein determination of the relative position features comprises:
determining position information of a plurality of texts in the textual data and a plurality of pictures in the picture data in the article;
constructing a relative position encoding matrix based on the position information, an element in the relative position encoding matrix characterizing relative position information between a text corresponding to a column to which the element belongs and a picture corresponding to a row to which the element belongs; and
determining a relative position feature between any of the plurality of texts and any of the plurality of pictures based on the relative position encoding matrix.

11. The method according to claim 1, wherein the article is classified by using the combined interaction feature by:
obtaining a full-connection feature by performing full-connection processing on the combined interaction feature;
obtaining a probability prediction result of the article by performing exponential normalization on the full-connection feature; the probability prediction result comprising a plurality of prediction probabilities, and the plurality of prediction probabilities corresponding to a plurality of classifications; and
determining a classification corresponding to a prediction probability meeting a target condition as an article classification to which the article belongs.

12. A data processing apparatus, the apparatus comprising:
a first acquisition module, configured to acquire a textual feature and a picture feature of an article, the textual feature characterizing textual data in the article, and the picture feature characterizing picture data in the article;
a second acquisition module, configured to fuse the textual feature with a part of the picture feature that is associated with the textual feature, to obtain a first interaction feature, by using a cross-modal interaction model which is configured to combine a textual modality associated to the textual feature as a first main modality and auxiliary information of a picture modality associated to the part of the picture feature as a first auxiliary modality;
a third acquisition module, configured to fuse the picture feature with a part of the textual feature that is associated with the picture feature to obtain a second interaction feature, by using the cross-modal interaction model which is configured to combine the picture modality associated to the picture feature as a second main modality and auxiliary information of a textual modality associated to the part of the textual feature as a second auxiliary modality; and
a fusion module, configured to obtain a combined interaction feature by fusing the first interaction feature and the second interaction feature, the combined interaction feature being used for classifying the article.

13. A computer device, the computer device comprising one or more processors and one or more memories, the one or more memories storing therein at least one computer program, and the at least one computer program being loaded and executed by the one or more processors to implement the data processing method according to any one of claims 1 to 11.

14. A storage medium, the storage medium storing therein at least one computer program, the at least one computer program being loaded and executed by a processor to implement the data processing method according to any one of claims 1 to 11.

15. A computer program product, the computer program product comprising at least one computer program, the at least one computer program being loaded and executed by a processor to implement the data processing method according to any one of claims 1 to 11.

## Patentansprüche

1. Datenverarbeitungsverfahren, das durch eine Computervorrichtung ausführbar ist, umfassend:
Erfassen eines textuellen Merkmals und eines Bildmerkmals eines Artikels, wobei das textuelle Merkmal textuelle Daten in dem Artikel charakterisiert und das Bildmerkmal Bilddaten in dem Artikel charakterisiert;
Fusionieren des textuellen Merkmals mit einem Teil des Bildmerkmals, der mit dem textuellen Merkmal assoziiert ist, um ein erstes Interaktionsmerkmal zu erhalten, unter Verwendung eines modalitätsübergreifenden Interaktionsmodells, das konfiguriert ist, eine textuelle Modalität, die mit dem textuellen Merkmal assoziiert ist, als eine erste Hauptmodalität und Hilfsinformation einer Bildmodalität, die mit dem Teil des Bildmerkmals assoziiert ist, als eine erste Hilfsmodalität zu kombinieren;
Fusionieren des Bildmerkmals mit einem Teil des textuellen Merkmals, der mit dem Bildmerkmal assoziiert ist, um ein zweites Interaktionsmerkmal zu erhalten, unter Verwendung des modalitätsübergreifenden Interaktionsmodells, das konfiguriert ist, die Bildmodalität, die mit dem Bildmerkmal assoziiert ist, als eine zweite Hauptmodalität und Hilfsinformation einer textuellen Modalität, die mit dem Teil des textuellen Merkmals assoziiert ist, als eine zweite Hilfsmodalität zu kombinieren; und
Erhalten eines kombinierten Interaktionsmerkmals durch Fusionieren des ersten Interaktionsmerkmals und des zweiten Interaktionsmerkmals, wobei das kombinierte Interaktionsmerkmal zum Klassifizieren des Artikels verwendet wird.

2. Verfahren nach Anspruch 1, wobei das Erfassen eines textuellen Merkmals und eines Bildmerkmals eines Artikels umfasst:
Extrahieren eines textuellen semantischen Merkmals der textuellen Daten und Erhalten des textuellen Merkmals durch Fusionieren des textuellen semantischen Merkmals und eines textuellen Positionsmerkmals; und
Extrahieren eines Bildtiefenmerkmals der Bilddaten und Erhalten des Bildmerkmals durch Fusionieren des Bildtiefenmerkmals und eines Bildpositionsmerkmals.

3. Verfahren nach Anspruch 2, wobei die textuellen Daten Titeldaten und Textdaten umfassen; das textuelle Merkmal ein Titelmerkmal und ein Textmerkmal umfasst;
das Extrahieren eines textuellen semantischen Merkmals der textuellen Daten umfasst:
Extrahieren eines semantischen Titelmerkmals der Titeldaten und eines semantischen Textmerkmals der Textdaten; und
das Erhalten des textuellen Merkmals durch Fusionieren des textuellen semantischen Merkmals und eines textuellen Positionsmerkmals umfasst:
Erhalten des Titelmerkmals durch Fusionieren des semantischen Titelmerkmals und eines Titelpositionsmerkmals; und
Erhalten des Textmerkmals durch Fusionieren des semantischen Textmerkmals und eines Textpositionsmerkmals.

4. Verfahren nach Anspruch 3, wobei das erste Interaktionsmerkmal ein Titelinteraktionsmerkmal und ein Textinteraktionsmerkmal umfasst und das Fusionieren des textuellen Merkmals mit einem Teil des Bildmerkmals, der mit dem textuellen Merkmal assoziiert ist, um ein erstes Interaktionsmerkmal zu erhalten, umfasst:
Fusionieren des Titelmerkmals mit einem Teil des Textmerkmals und einem Teil des Bildmerkmals, die mit dem Titelmerkmal assoziiert sind, um das Titelinteraktionsmerkmal zu erhalten; und
Fusionieren des Textmerkmals mit einem Teil des Titelmerkmals und einem Teil des Bildmerkmals, die mit dem Textmerkmal assoziiert sind, um das Textinteraktionsmerkmal zu erhalten.

5. Verfahren nach Anspruch 4, wobei das Fusionieren des Titelmerkmals mit einem Teil des Textmerkmals und einem Teil des Bildmerkmals, die mit dem Titelmerkmal assoziiert sind, um das Titelinteraktionsmerkmal zu erhalten, umfasst:
Fusionieren des Titelmerkmals mit dem Teil des Textmerkmals, der mit dem Titelmerkmal assoziiert ist, um ein erstes Titelinteraktionsmerkmal zu erhalten;
Fusionieren des Titelmerkmals mit dem Teil des Bildmerkmals, der mit dem Titelmerkmal assoziiert ist, um ein zweites Titelinteraktionsmerkmal zu erhalten;
Erhalten eines dritten Titelinteraktionsmerkmals durch Verketten des ersten Titelinteraktionsmerkmals und des zweiten Titelinteraktionsmerkmals; und
Erhalten des Titelinteraktionsmerkmals durch Kodieren und Dekodieren des dritten Titelinteraktionsmerkmals.

6. Verfahren nach Anspruch 4, wobei das Fusionieren des Textmerkmals mit einem Teil des Titelmerkmals und einem Teil des Bildmerkmals, die mit dem Textmerkmal assoziiert sind, um das Textinteraktionsmerkmal zu erhalten, umfasst:
Fusionieren des Textmerkmals mit dem Teil des Titelmerkmals, der mit dem Textmerkmal assoziiert ist, um ein erstes Textinteraktionsmerkmal zu erhalten;
Fusionieren des Textmerkmals mit dem Teil des Bildmerkmals, der mit dem Textmerkmal assoziiert ist, um ein zweites Textinteraktionsmerkmal zu erhalten;
Erhalten eines dritten Textinteraktionsmerkmals durch Verketten des ersten Textinteraktionsmerkmals und des zweiten Textinteraktionsmerkmals; und
Erhalten des Textinteraktionsmerkmals durch Kodieren und Dekodieren des dritten Textinteraktionsmerkmals.

7. Verfahren nach Anspruch 3, wobei das Fusionieren des Bildmerkmals und eines Teils des textuellen Merkmals, der mit dem Bildmerkmal assoziiert ist, um ein zweites Interaktionsmerkmal zu erhalten, umfasst:
Fusionieren des Bildmerkmals mit einem Teil des Textmerkmals und einem Teil des Titelmerkmals, die mit dem Bildmerkmal assoziiert sind, um das zweite Interaktionsmerkmal zu erhalten.

8. Verfahren nach Anspruch 7, wobei das Fusionieren des Bildmerkmals mit einem Teil des Textmerkmals und einem Teil des Titelmerkmals, die mit dem Bildmerkmal assoziiert sind, um das zweite Interaktionsmerkmal zu erhalten, umfasst:
Fusionieren des Bildmerkmals mit dem Teil des Titelmerkmals, der mit dem Bildmerkmal assoziiert ist, um ein erstes Bildinteraktionsmerkmal zu erhalten;
Fusionieren des Bildmerkmals mit dem Teil des Textmerkmals, der mit dem Bildmerkmal assoziiert ist, um ein zweites Bildinteraktionsmerkmal zu erhalten;
Erhalten eines dritten Bildinteraktionsmerkmals durch Verketten des ersten Bildinteraktionsmerkmals und des zweiten Bildinteraktionsmerkmals; und
Erhalten des zweiten Interaktionsmerkmals durch Kodieren und Dekodieren des dritten Bildinteraktionsmerkmals.

9. Verfahren nach Anspruch 2, wobei jedes der Merkmale, nämlich das textuelle Positionsmerkmal und das Bildpositionsmerkmal, ein relatives Positionsmerkmal zwischen den textuellen Daten und den Bilddaten ist, wobei das relative Positionsmerkmal eine Reihenfolge, in der die textuellen Daten und die Bilddaten in dem Artikel erscheinen, und einen Abstand zwischen den textuellen Daten und den Bilddaten charakterisiert.

10. Verfahren nach Anspruch 9, wobei die Bestimmung der relativen Positionsmerkmale umfasst:
Bestimmen von Positionsinformation einer Mehrzahl von Texten in den textuellen Daten und einer Mehrzahl von Bildern in den Bilddaten in dem Artikel;
Konstruieren einer relativen Positionskodierungsmatrix basierend auf der Positionsinformation, wobei ein Element in der relativen Positionskodierungsmatrix relative Positionsinformation zwischen einem Text, der einer Spalte entspricht, zu der das Element gehört, und einem Bild, das einer Zeile entspricht, zu der das Element gehört, charakterisiert; und
Bestimmen eines relativen Positionsmerkmals zwischen einem beliebigen der Mehrzahl von Texten und einem beliebigen der Mehrzahl von Bildern basierend auf der relativen Positionskodierungsmatrix.

11. Verfahren nach Anspruch 1, wobei der Artikel unter Verwendung des kombinierten Interaktionsmerkmals klassifiziert wird durch:
Erhalten eines Vollverbindungsmerkmals durch Durchführen einer Vollverbindungsverarbeitung an dem kombinierten Interaktionsmerkmal;
Erhalten eines Wahrscheinlichkeitsvorhersageergebnisses des Artikels durch Durchführen einer Exponentialnormierung an dem Vollverbindungsmerkmal; wobei das Wahrscheinlichkeitsvorhersageergebnis eine Mehrzahl von Vorhersagewahrscheinlichkeiten umfasst und die Mehrzahl von Vorhersagewahrscheinlichkeiten einer Mehrzahl von Klassifikationen entspricht; und
Bestimmen einer Klassifikation, die einer Vorhersagewahrscheinlichkeit entspricht, die eine Zielbedingung erfüllt, als eine Artikelklassifikation, zu der der Artikel gehört.

12. Datenverarbeitungsvorrichtung, wobei die Vorrichtung umfasst:
ein erstes Erfassungsmodul, das konfiguriert ist, ein textuelles Merkmal und ein Bildmerkmal eines Artikels zu erfassen, wobei das textuelle Merkmal textuelle Daten in dem Artikel charakterisiert und das Bildmerkmal Bilddaten in dem Artikel charakterisiert;
ein zweites Erfassungsmodul, das konfiguriert ist, das textuelle Merkmal mit einem Teil des Bildmerkmals, der mit dem textuellen Merkmal assoziiert ist, zu fusionieren, um ein erstes Interaktionsmerkmal zu erhalten, unter Verwendung eines modalitätsübergreifenden Interaktionsmodells, das konfiguriert ist, eine textuelle Modalität, die mit dem textuellen Merkmal assoziiert ist, als eine erste Hauptmodalität und Hilfsinformation einer Bildmodalität, die mit dem Teil des Bildmerkmals assoziiert ist, als eine erste Hilfsmodalität zu kombinieren;
ein drittes Erfassungsmodul, das konfiguriert ist, das Bildmerkmal mit einem Teil des textuellen Merkmals, der mit dem Bildmerkmal assoziiert ist, zu fusionieren, um ein zweites Interaktionsmerkmal zu erhalten, unter Verwendung des modalitätsübergreifenden Interaktionsmodells, das konfiguriert ist, die Bildmodalität, die mit dem Bildmerkmal assoziiert ist, als eine zweite Hauptmodalität und Hilfsinformation einer textuellen Modalität, die mit dem Teil des textuellen Merkmals assoziiert ist, als eine zweite Hilfsmodalität zu kombinieren; und
ein Fusionsmodul, das konfiguriert ist, ein kombiniertes Interaktionsmerkmal durch Fusionieren des ersten Interaktionsmerkmals und des zweiten Interaktionsmerkmals zu erhalten, wobei das kombinierte Interaktionsmerkmal zum Klassifizieren des Artikels verwendet wird.

13. Computervorrichtung, wobei die Computervorrichtung einen oder mehrere Prozessoren und einen oder mehrere Speicher umfasst, wobei der eine oder die mehreren Speicher darin mindestens ein Computerprogramm speichern und das mindestens eine Computerprogramm durch den einen oder die mehreren Prozessoren geladen und ausgeführt wird, um das Datenverarbeitungsverfahren nach einem der Ansprüche 1 bis 11 zu implementieren.

14. Speichermedium, wobei das Speichermedium darin mindestens ein Computerprogramm speichert, wobei das mindestens eine Computerprogramm durch einen Prozessor geladen und ausgeführt wird, um das Datenverarbeitungsverfahren nach einem der Ansprüche 1 bis 11 zu implementieren.

15. Computerprogrammprodukt, wobei das Computerprogrammprodukt mindestens ein Computerprogramm umfasst, wobei das mindestens eine Computerprogramm durch einen Prozessor geladen und ausgeführt wird, um das Datenverarbeitungsverfahren nach einem der Ansprüche 1 bis 11 zu implementieren.

## Revendications

1. Procédé de traitement de données exécutable par un dispositif informatique, comprenant :
acquérir une caractéristique textuelle et une caractéristique d'image d'un article, la caractéristique textuelle caractérisant des données textuelles dans l'article, et la caractéristique d'image caractérisant des données d'image dans l'article ;
fusionner la caractéristique textuelle avec une partie de la caractéristique d'image qui est associée à la caractéristique textuelle, pour obtenir une première caractéristique d'interaction, en utilisant un modèle d'interaction intermodal qui est configuré pour combiner une modalité textuelle associée à la caractéristique textuelle en tant que première modalité principale et des informations auxiliaires d'une modalité d'image associée à la partie de la caractéristique d'image en tant que première modalité auxiliaire ;
fusionner la caractéristique d'image avec une partie de la caractéristique textuelle qui est associée à la caractéristique d'image, pour obtenir une deuxième caractéristique d'interaction, en utilisant le modèle d'interaction intermodal qui est configuré pour combiner la modalité d'image associée à la caractéristique d'image en tant que deuxième modalité principale et des informations auxiliaires d'une modalité textuelle associée à la partie de la caractéristique textuelle en tant que deuxième modalité auxiliaire ; et
obtenir une caractéristique d'interaction combinée en fusionnant la première caractéristique d'interaction et la deuxième caractéristique d'interaction, la caractéristique d'interaction combinée étant utilisée pour classifier l'article.

2. Procédé selon la revendication 1, dans lequel l'acquisition d'une caractéristique textuelle et d'une caractéristique d'image d'un article comprend :
extraire une caractéristique sémantique textuelle des données textuelles, et obtenir la caractéristique textuelle en fusionnant la caractéristique sémantique textuelle et une caractéristique de position textuelle ; et
extraire une caractéristique de profondeur d'image des données d'image, et obtenir la caractéristique d'image en fusionnant la caractéristique de profondeur d'image et une caractéristique de position d'image.

3. Procédé selon la revendication 2, dans lequel les données textuelles comprennent des données de titre et des données de texte ; la caractéristique textuelle comprend une caractéristique de titre et une caractéristique de texte ; l'extraction d'une caractéristique sémantique textuelle des données textuelles comprend :
extraire une caractéristique sémantique de titre des données de titre et une caractéristique sémantique de texte des données de texte ; et
l'obtention de la caractéristique textuelle en fusionnant la caractéristique sémantique textuelle et une caractéristique de position textuelle comprend :
obtenir la caractéristique de titre en fusionnant la caractéristique sémantique de titre et une caractéristique de position de titre ; et
obtenir la caractéristique de texte en fusionnant la caractéristique sémantique de texte et une caractéristique de position de texte.

4. Procédé selon la revendication 3, dans lequel la première caractéristique d'interaction comprend une caractéristique d'interaction de titre et une caractéristique d'interaction de texte, et la fusion de la caractéristique textuelle avec une partie de la caractéristique d'image qui est associée à la caractéristique textuelle pour obtenir une première caractéristique d'interaction comprend :
fusionner la caractéristique de titre avec une partie de la caractéristique de texte et une partie de la caractéristique d'image qui sont associées à la caractéristique de titre, pour obtenir la caractéristique d'interaction de titre ; et
fusionner la caractéristique de texte avec une partie de la caractéristique de titre et une partie de la caractéristique d'image qui sont associées à la caractéristique de texte, pour obtenir la caractéristique d'interaction de texte.

5. Procédé selon la revendication 4, dans lequel la fusion de la caractéristique de titre avec une partie de la caractéristique de texte et une partie de la caractéristique d'image qui sont associées à la caractéristique de titre, pour obtenir la caractéristique d'interaction de titre, comprend :
fusionner la caractéristique de titre avec la partie de la caractéristique de texte qui est associée à la caractéristique de titre, pour obtenir une première caractéristique d'interaction de titre ;
fusionner la caractéristique de titre avec la partie de la caractéristique d'image qui est associée à la caractéristique de titre, pour obtenir une deuxième caractéristique d'interaction de titre ;
obtenir une troisième caractéristique d'interaction de titre en concaténant la première caractéristique d'interaction de titre et la deuxième caractéristique d'interaction de titre ; et
obtenir la caractéristique d'interaction de titre par encodage et décodage de la troisième caractéristique d'interaction de titre.

6. Procédé selon la revendication 4, dans lequel la fusion de la caractéristique de texte avec une partie de la caractéristique de titre et une partie de la caractéristique d'image qui sont associées à la caractéristique de texte, pour obtenir la caractéristique d'interaction de texte, comprend :
fusionner la caractéristique de texte avec la partie de la caractéristique de titre qui est associée à la caractéristique de texte, pour obtenir une première caractéristique d'interaction de texte ;
fusionner la caractéristique de texte avec la partie de la caractéristique d'image qui est associée à la caractéristique de texte, pour obtenir une deuxième caractéristique d'interaction de texte ;
obtenir une troisième caractéristique d'interaction de texte en concaténant la première caractéristique d'interaction de texte et la deuxième caractéristique d'interaction de texte ; et
obtenir la caractéristique d'interaction de texte par encodage et décodage de la troisième caractéristique d'interaction de texte.

7. Procédé selon la revendication 3, dans lequel la fusion de la caractéristique d'image et d'une partie de la caractéristique textuelle qui est associée à la caractéristique d'image pour obtenir une deuxième caractéristique d'interaction comprend :
fusionner la caractéristique d'image avec une partie de la caractéristique de texte et une partie de la caractéristique de titre qui sont associées à la caractéristique d'image, pour obtenir la deuxième caractéristique d'interaction.

8. Procédé selon la revendication 7, dans lequel la fusion de la caractéristique d'image avec une partie de la caractéristique de texte et une partie de la caractéristique de titre qui sont associées à la caractéristique d'image, pour obtenir la deuxième caractéristique d'interaction, comprend :
fusionner la caractéristique d'image avec la partie de la caractéristique de titre qui est associée à la caractéristique d'image, pour obtenir une première caractéristique d'interaction d'image ;
fusionner la caractéristique d'image avec la partie de la caractéristique de texte qui est associée à la caractéristique d'image, pour obtenir une deuxième caractéristique d'interaction d'image ;
obtenir une troisième caractéristique d'interaction d'image en concaténant la première caractéristique d'interaction d'image et la deuxième caractéristique d'interaction d'image ; et
obtenir la deuxième caractéristique d'interaction par encodage et décodage de la troisième caractéristique d'interaction d'image.

9. Procédé selon la revendication 2, dans lequel chacune des caractéristiques de position textuelle et de position d'image est une caractéristique de position relative entre les données textuelles et les données d'image, la caractéristique de position relative caractérisant un ordre dans lequel les données textuelles et les données d'image apparaissent dans l'article et une distance entre les données textuelles et les données d'image.

10. Procédé selon la revendication 9, dans lequel la détermination des caractéristiques de position relative comprend :
déterminer des informations de position d'une pluralité de textes dans les données textuelles et d'une pluralité d'images dans les données d'image dans l'article ;
construire une matrice d'encodage de position relative basée sur les informations de position, un élément dans la matrice d'encodage de position relative caractérisant des informations de position relative entre un texte correspondant à une colonne à laquelle l'élément appartient et une image correspondant à une rangée à laquelle l'élément appartient ; et
déterminer une caractéristique de position relative entre l'un quelconque de la pluralité de textes et l'une quelconque de la pluralité d'images sur la base de la matrice d'encodage de position relative.

11. Procédé selon la revendication 1, dans lequel l'article est classifié en utilisant la caractéristique d'interaction combinée par :
obtenir une caractéristique de connexion complète en effectuant un traitement de connexion complète sur la caractéristique d'interaction combinée ;
obtenir un résultat de prédiction de probabilité de l'article en effectuant une normalisation exponentielle sur la caractéristique de connexion complète ; le résultat de prédiction de probabilité comprenant une pluralité de probabilités de prédiction, et la pluralité de probabilités de prédiction correspondant à une pluralité de classifications ; et
déterminer une classification correspondant à une probabilité de prédiction satisfaisant une condition cible en tant que classification d'article à laquelle l'article appartient.

12. Appareil de traitement de données, l'appareil comprenant :
un premier module d'acquisition, configuré pour acquérir une caractéristique textuelle et une caractéristique d'image d'un article, la caractéristique textuelle caractérisant des données textuelles dans l'article, et la caractéristique d'image caractérisant des données d'image dans l'article ;
un deuxième module d'acquisition, configuré pour fusionner la caractéristique textuelle avec une partie de la caractéristique d'image qui est associée à la caractéristique textuelle, pour obtenir une première caractéristique d'interaction, en utilisant un modèle d'interaction intermodal qui est configuré pour combiner une modalité textuelle associée à la caractéristique textuelle en tant que première modalité principale et des informations auxiliaires d'une modalité d'image associée à la partie de la caractéristique d'image en tant que première modalité auxiliaire ;
un troisième module d'acquisition, configuré pour fusionner la caractéristique d'image avec une partie de la caractéristique textuelle qui est associée à la caractéristique d'image pour obtenir une deuxième caractéristique d'interaction, en utilisant le modèle d'interaction intermodal qui est configuré pour combiner la modalité d'image associée à la caractéristique d'image en tant que deuxième modalité principale et des informations auxiliaires d'une modalité textuelle associée à la partie de la caractéristique textuelle en tant que deuxième modalité auxiliaire ; et
un module de fusion, configuré pour obtenir une caractéristique d'interaction combinée en fusionnant la première caractéristique d'interaction et la deuxième caractéristique d'interaction, la caractéristique d'interaction combinée étant utilisée pour classifier l'article.

13. Dispositif informatique, le dispositif informatique comprenant un ou plusieurs processeurs et une ou plusieurs mémoires, lesdites une ou plusieurs mémoires stockant en leur sein au moins un programme informatique, et ledit au moins un programme informatique étant chargé et exécuté par les un ou plusieurs processeurs pour mettre en œuvre le procédé de traitement de données selon l'une quelconque des revendications 1 à 11.

14. Support de stockage, le support de stockage stockant en son sein au moins un programme informatique, ledit au moins un programme informatique étant chargé et exécuté par un processeur pour mettre en œuvre le procédé de traitement de données selon l'une quelconque des revendications 1 à 11.

15. Produit-programme d'ordinateur, le produit-programme d'ordinateur comprenant au moins un programme informatique, ledit au moins un programme informatique étant chargé et exécuté par un processeur pour mettre en œuvre le procédé de traitement de données selon l'une quelconque des revendications 1 à 11.
